# EUROPEAN PATENT SPECIFICATION

(11) **EP 4 533 226 B1**
(45) Date of publication and mention of the grant of the patent: **10.06.2026**
(21) Application number: 23816854.6
(22) Date of filing: 25.05.2023
(51) Int. Cl.: G06Q 30/0601, G02B 27/01, G06F 3/01

(54) **AUGMENTED REALITY SELF-SCANNING AND SELF-CHECKOUT**
SELBSTSCANNENDE UND SELBSTBEDIENUNGSKASSE DER ERWEITERTEN REALITÄT
AUTO-BALAYAGE ET AUTO-VÉRIFICATION DE RÉALITÉ AUGMENTÉE

(30) Priority: 02.06.2022 US 202217830661
(43) Date of publication of application: 09.04.2025
(73) Proprietor: Snap Inc., Santa Monica, CA 90405 (US)
(72) Inventor: GURGUL, Piotr, Santa Monica, California 90405 (US); MOLL, Sharon, Santa Monica, California 90405 (US)
(74) Representative: Mathys & Squire
(86) International application number: PCT/US2023/067458
(87) International publication number: WO 2023/235673

(56) References cited:
- US-A1- 2014 172 555
- US-A1- 2014 379 468
- US-A1- 2015 192 999
- US-A1- 2015 302 517
- US-A1- 2015 379 770
- US-A1- 2019 273 854
- US-A1- 2020 380 591

## Description

### RELATED APPLICATION DATA

This application claims priority to U.S. Patent Application No. 17/830,661 filed on June 2, 2022.

### TECHNICAL FIELD

The present disclosure relates generally to display devices and more particularly to display devices used for augmented reality.

### BACKGROUND

A head-worn device may be implemented with a transparent or semi-transparent display through which a user of the head-worn device can view the surrounding environment. Such devices enable a user to see through the transparent or semi-transparent display to view the surrounding environment, and to also see objects (e.g., virtual objects such as 3D renderings, images, video, text, and so forth) that are generated for display to appear as a part of, and/or overlaid upon, the surrounding environment. This is typically referred to as "augmented reality" or "AR."

A user of the head-worn device may access and use a computer software application to perform various tasks or to engage in an entertaining activity. To use the computer software application, the user interacts with a user interface provided by the head-worn device.

US 2015/192999 A1 describes systems and methods for implementing retail processes based on machine-readable images and user gestures. According to an aspect, a method includes capturing one or more images including a machine-readable image and a user gesture. The method also includes identifying the machine-readable image as being associated with a product. Further, the method includes determining whether the user gesture interacts with the machine-readable image in accordance with a predetermined gesture. The method also includes implementing a predetermined retail process in association with the product in response to determining that the user gesture interacts with the machine-readable image in accordance with the predetermined gesture.

US 2015/379770 A1 describes a system and method for identifying objects, and performing a digital action with respect to the object in a mixed reality environment. Objects may be recognized by a processing unit receiving feedback from a head mounted display worn by a user in a number of ways. Once an object is identified, the digital action performed may be displaying additional information on the object, either on a virtual display slate or as a three-dimensional virtual representation.

US 2014/172555 A1 describes a computer-implemented method that includes the step of receiving, at a processing device of a commerce server, one or more signals from a head mountable unit associated with each of a plurality of products physically placed in a shopping cart by a consumer. The method also includes the step of identifying, with the processing device, each of the plurality of products in response to the corresponding one or more signals received from the head mountable unit. The method also includes the step of correlating, with the processing device, each of the plurality of products with a price. The method also includes the step of maintaining, with the processing device, a summation of the prices of the plurality of products. The method also includes the step of transmitting, with the processing device, the summation to the head mountable unit.

### SUMMARY OF THE INVENTION

According to an aspect of the present invention, there is provided a method as defined in claim 1. According to further aspects of the present invention, there is provided a corresponding non-transitory computer-readable medium and system as defined in claims 9 and 12. Preferred and/or optional features are set out in the dependent claims.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a perspective view of a head-worn device, in accordance with some examples.
FIG. 2 illustrates a further view of the head-worn device of FIG. 1, in accordance with some examples.
FIG. 3 is a block diagram illustrating a networked system 300 including details of the head-worn device of FIG. 1, in accordance with some examples.
FIG. 4 illustrates a view through the lenses of a head-worn device, including a shopping user interface, according to some examples.
FIG. 5 illustrates a view through the lenses of a head-worn device, including a shopping user interface, according to some examples.
FIG. 6 illustrates a view through the lenses of a head-worn device, including a shopping user interface, according to some examples.
FIG. 7 illustrates a view through the lenses of a head-worn device, including a shopping user interface, according to some examples.
FIG. 8 illustrates a view through the lenses of a head-worn device, including a shopping user interface, according to some examples.
FIG. 9 illustrates a view through the lenses of a head-worn device, including a shopping user interface, according to some examples.
FIG. 10 illustrates a view through the lenses of a head-worn device, including a shopping user interface, according to some examples.
FIG. 11 illustrates a view through the lenses of a head-worn device, including a shopping user interface, according to some examples.
FIG. 12 illustrates a view through the lenses of a head-worn device, including a shopping user interface, according to some examples.
FIG. 13 is a flowchart illustrating a method of providing a shopping user interface, according to some examples.
FIG. 14 is a flowchart illustrating a subroutine of the flowchart of FIG. 14., according to some examples.
FIG. 15 is a diagrammatic representation of a networked environment in which the present disclosure may be deployed, in accordance with some examples.
FIG. 16 is a block diagram showing a software architecture within which the present disclosure may be implemented, in accordance with some examples.
FIG. 17 is a diagrammatic representation of a machine, in the form of a computer system within which a set of instructions may be executed for causing the machine to perform any one or more of the methodologies discussed herein in accordance with some examples.

### DETAILED DESCRIPTION

Some head-worn AR devices, such as AR glasses, include a transparent or semi-transparent display that enables a user to see through the transparent or semi-transparent display to view the surrounding environment. Additional information or objects (e.g., virtual objects such as 3D renderings, images, video, text, and so forth) are shown on the display and appear as a part of, and/or overlaid upon, the surrounding environment to provide an augmented reality (AR) experience for the user. The display may for example include a waveguide that receives a light beam from a projector but any appropriate display for presenting augmented or virtual content to the wearer may be used.

As referred to herein, the phrase "augmented reality experience," includes or refers to various image processing operations corresponding to an image modification, filter, media overlay, transformation, and the like, as described further herein. In some examples, these image processing operations provide an interactive experience of a real-world environment, where objects, surfaces, backgrounds, lighting and so forth in the real world are enhanced by computer-generated perceptual information. In this context an "augmented reality effect" comprises the collection of data, parameters, and other assets used to apply a selected augmented reality experience to an image or a video feed. In some examples, augmented reality effects are provided by Snap, Inc. under the registered trademark LENSES.

During grocery shopping or other retail shopping, a user is typically required to gather all the items together and perform a check out transaction near the entrance to the store, either at a self-serve checkout station or at a traditional checkout point. There have been some attempts to have checkout-free shopping, for example by scanning RFID tags on the products as the customer leaves the store, but these have yet to find wide adoption. Smartphone applications can also provide barcode scanning, pricing and other information, but this requires the user to hold the smartphone in one hand while, for example, holding a shopping basket in the other hand, which requires one of the items to be put down or away when handling items intended for purchase.

A head-worn augmented reality device can provide a retail experience in which relevant product information, pricing and a checkout list can be created and managed conveniently. A camera in the head-worn augmented reality device can identify a product to be purchased, obtain and display pricing information, and keep a list of items that have been selected for purchase.

In some examples, a computer-implemented method using a head-mounted display device including a camera and one or more displays, includes detecting a presence of an optical code in a field of view of the camera of the head-mounted display device, obtaining product and pricing information for an item based on information in the optical code, the product and pricing information including an item identifier and a price, displaying the item identifier and the price in a first display area of the one or more displays of the head-mounted display device, and transferring the item identifier and the price into a shopping cart list in a second display area of the one or more displays of the head-mounted display device.

The item identifier and the price may be transferred into the shopping cart list after a delay and without user input. The head-mounted display device may include a touchpad located on a side of the head-mounted display device, the method further including displaying a default item quantity for the item in the first display area, and receiving an input on the touchpad (such as forward or rearward swipe) to change the default item quantity for the item to an updated item quantity.

The product information for the item may be compared with product information in a user profile. Based on the comparison, if it is determined that the item is not preferred, a warning may be displayed in the first display area. The method may also include, based on determining that the item is not preferred, setting a default item quantity for the item to zero.

The computer implemented method may also include where the head-mounted display device includes a touchpad located on a side of the head-mounted display device, the method further includes receiving user selection of an item identifier in the shopping cart list, displaying the item identifier and the price in the first display area, and receiving user input (such as forward or rearward swipe) on the touchpad to change an item quantity for the item to an updated item quantity.

The computer implemented method may further include determining a store identity, and accessing product availability and pricing information based on the store identity. The store identity may be determined from the group consisting of scanning of an a store-identifying optical code located at the store, a short range RF signal transmitted at the store, and a GPS location of the store.

In some examples, provided is a non-transitory computer-readable storage medium, the computer-readable storage medium including instructions that when executed by a computer, cause the computer to perform operations for providing a user interface in a head-mounted display device including a camera and one or more displays according to any of the methods described above, including but not limited to a method in which the operations comprise detecting a presence of an optical code in a field of view of the camera of the head-mounted display device, obtaining product and pricing information for an item based on information in the optical code, the product and pricing information including an item identifier and a price, displaying the item identifier and the price in a first display area of the one or more displays of the head-mounted display device, and transferring the item identifier and the price into a shopping cart list in a second display area of the one or more displays of the head-mounted display device.

In some examples, provided is a computing apparatus comprising a processor and a memory storing instructions that, when executed by the processor, configure the apparatus to perform operations for providing a user interface in a head-mounted display device including a camera and one or more displays according to any of the methods described above, including but not limited to a method in which the operations comprise detecting a presence of an optical code in a field of view of the camera of the head-mounted display device, obtaining product and pricing information for an item based on information in the optical code, the product and pricing information including an item identifier and a price, displaying the item identifier and the price in a first display area of the one or more displays of the head-mounted display device, and transferring the item identifier and the price into a shopping cart list in a second display area of the one or more displays of the head-mounted display device.

Other technical features may be readily apparent to one skilled in the art from the following figures, descriptions, and claims.

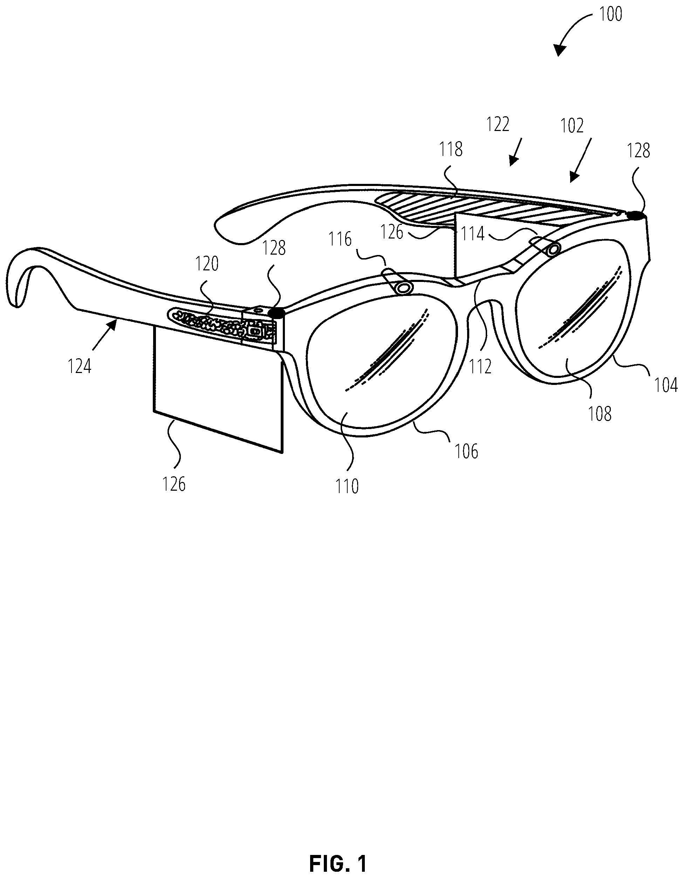

FIG. 1 is a perspective view of a head-mounted AR display device (e.g., glasses 100), in accordance with some examples. The glasses 100 can include a frame 102 made from any suitable material such as plastic or metal, including any suitable shape memory alloy. In one or more examples, the frame 102 includes a first or left optical element holder 104 (e.g., a display or lens holder) and a second or right optical element holder 106 connected by a bridge 112. A first or left optical element 108 and a second or right optical element 110 can be provided within respective left optical element holder 104 and right optical element holder 106. The right optical element 110 and the left optical element 108 can be a lens, a display, a display assembly, or a combination of the foregoing. Any suitable display assembly can be provided in the glasses 100.

The frame 102 additionally includes a left arm or temple piece 122 and a right arm or temple piece 124. In some examples the frame 102 can be formed from a single piece of material so as to have a unitary or integral construction.

The glasses 100 can include a computing device, such as a computer 120, which can be of any suitable type so as to be carried by the frame 102 and, in one or more examples, of a suitable size and shape so as to be partially disposed in one of the temple piece 122 or the temple piece 124. The computer 120 can include one or more processors with memory, wireless communication circuitry, and a power source. As discussed below, the computer 120 comprises low-power circuitry, high-speed circuitry, and a display processor. Various other examples may include these elements in different configurations or integrated together in different ways. Additional details of aspects of computer 120 may be implemented as illustrated by the data processor 302 discussed below.

The computer 120 additionally includes a battery 118 or other suitable portable power supply. In some examples, the battery 118 is disposed in left temple piece 122 and is electrically coupled to the computer 120 disposed in the right temple piece 124. The glasses 100 can include a connector or port (not shown) suitable for charging the battery 118, a wireless receiver, transmitter or transceiver (not shown), or a combination of such devices.

The glasses 100 include a first or left camera 114 and a second or right camera 116. Although two cameras are depicted, other examples contemplate the use of a single or additional (i.e., more than two) cameras. In one or more examples, the glasses 100 include any number of input sensors or other input/output devices in addition to the left camera 114 and the right camera 116. Such sensors or input/output devices can additionally include biometric sensors, location sensors, motion sensors, and so forth.

In some examples, the left camera 114 and the right camera 116 provide video frame data for use by the glasses 100 to extract 3D information from a real world scene.

The glasses 100 may also include a touchpad 126 mounted to or integrated with one or both of the left temple piece 122 and right temple piece 124. The touchpad 126 is generally vertically-arranged, approximately parallel to a user's temple in some examples. As used herein, generally vertically aligned means that the touchpad is more vertical than horizontal, although potentially more vertical than that. Additional user input may be provided by one or more buttons 128, which in the illustrated examples are provided on the outer upper edges of the left optical element holder 104 and right optical element holder 106. The one or more touchpads 126 and buttons 128 provide a means whereby the glasses 100 can receive input from a user of the glasses 100.

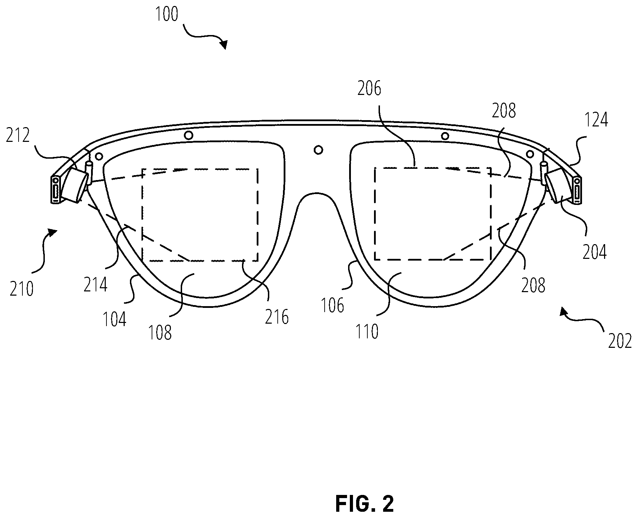

FIG. 2 illustrates the glasses 100 from the perspective of a user. For clarity, a number of the elements shown in FIG. 1 have been omitted. As described in FIG. 1, the glasses 100 shown in FIG. 2 include left optical element 108 and right optical element 110 secured within the left optical element holder 104 and the right optical element holder 106 respectively.

The glasses 100 include forward optical assembly 202 comprising a right projector 204 and a right near eye display 206, and a forward optical assembly 210 including a left projector 212 and a left near eye display 216.

In some examples, the near eye displays are waveguides. The waveguides include reflective or diffractive structures (e.g., gratings and/or optical elements such as mirrors, lenses, or prisms). Light 208 emitted by the projector 204 encounters the diffractive structures of the waveguide of the near eye display 206, which directs the light towards the right eye of a user to provide an image on or in the right optical element 110 that overlays the view of the real world seen by the user. Similarly, light 214 emitted by the projector 212 encounters the diffractive structures of the waveguide of the near eye display 216, which directs the light towards the left eye of a user to provide an image on or in the left optical element 108 that overlays the view of the real world seen by the user. The combination of a GPU, the forward optical assembly 202, the left optical element 108, and the right optical element 110 provide an optical engine of the glasses 100. The glasses 100 use the optical engine to generate an overlay of the real world view of the user including display of a 3D user interface to the user of the glasses 100.

It will be appreciated however that other display technologies or configurations may be utilized within an optical engine to display an image to a user in the user's field of view. For example, instead of a projector 204 and a waveguide, an LCD, LED or other display panel or surface may be provided.

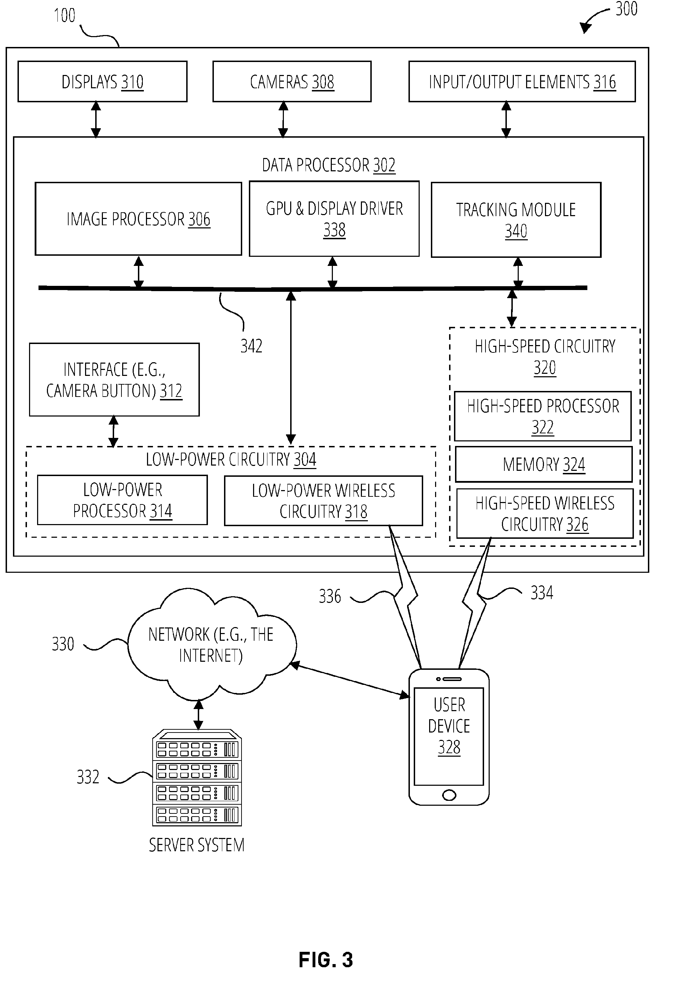

In use, a user of the glasses 100 will be presented with information, content and various 3D user interfaces on the near eye displays. As described in more detail herein, the user can then interact with the glasses 100 using a touchpad 126 and/or the buttons 128, voice inputs or touch inputs on an associated device (e.g., user device 328 illustrated in FIG. 3), and/or hand movements, locations, and positions detected by the glasses 100.

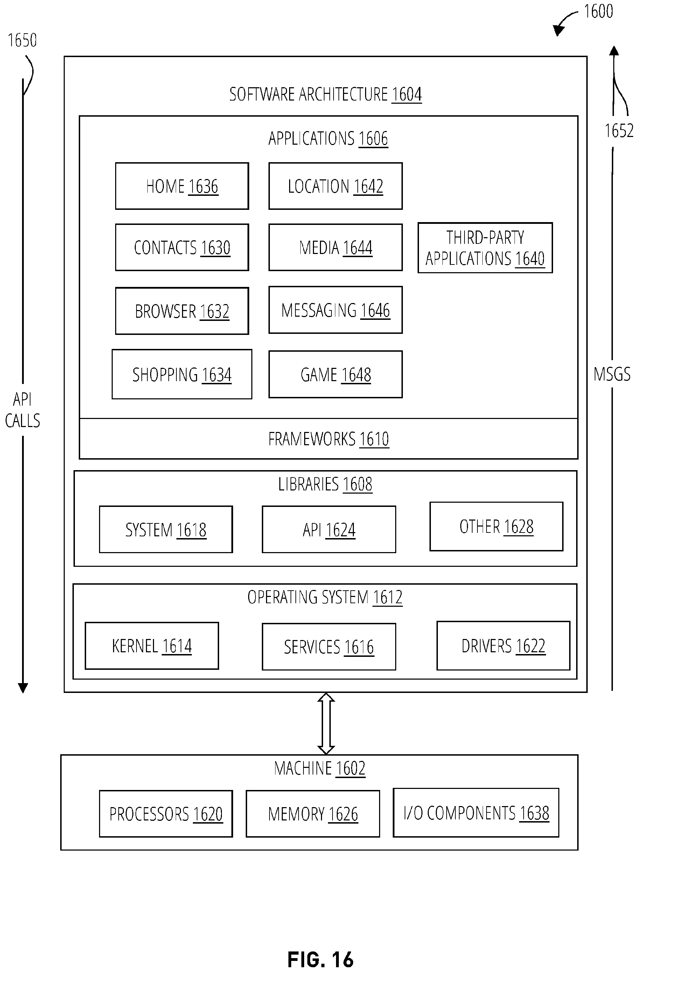

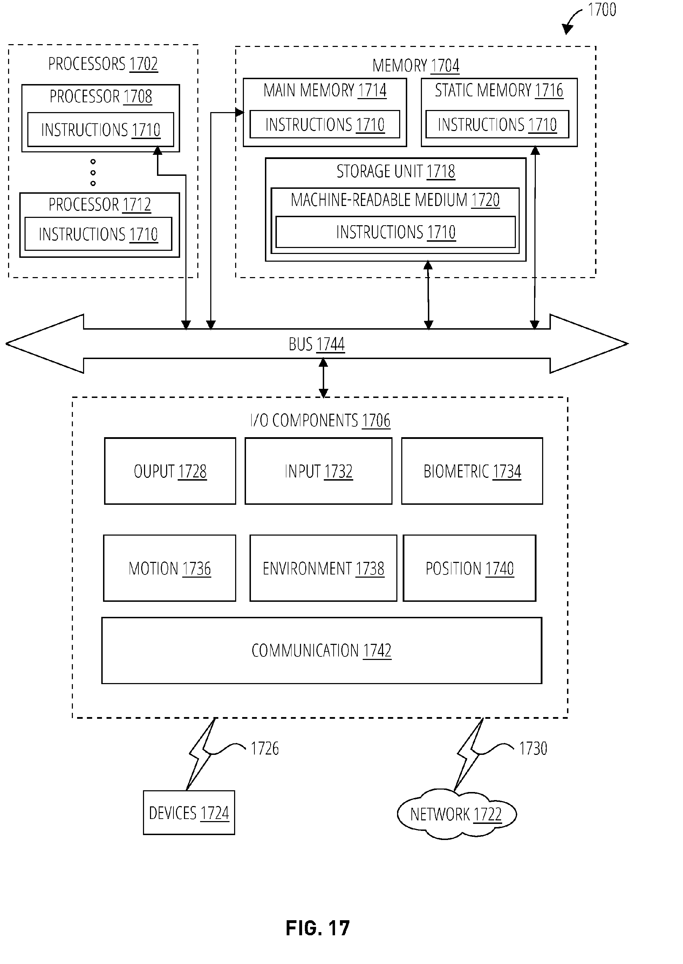

FIG. 3 is a block diagram illustrating a networked system 300 including details of the glasses 100, in accordance with some examples. The networked system 300 includes the glasses 100, a user device 328, and a server system 332. The user device 328 may be a smartphone, tablet, phablet, laptop computer, access point, or any other such device capable of connecting with the glasses 100 using a low-power wireless connection 336 and/or a high-speed wireless connection 334. The user device 328 is connected to the server system 332 via the network 330. The network 330 may include any combination of wired and wireless connections. The server system 332 may be one or more computing devices as part of a service or network computing system. The user device 328 and any elements of the server system 332 and network 330 may be implemented using details of the software architecture 1604 or the machine 1700 described in FIG. 16 and FIG. 17 respectively.

The glasses 100 include a data processor 302, displays 310, one or more cameras 308, and additional input/output elements 316. The input/output elements 316 may include microphones, audio speakers, biometric sensors, additional sensors, or additional display elements integrated with the data processor 302. Examples of the input/output elements 316 are discussed further with respect to FIG. 16 and FIG. 17. For example, the input/output elements 316 may include any of I/O components 1706 including output components 1728, motion components 1736, and so forth. Examples of the displays 310 are discussed in FIG. 2. In the particular examples described herein, the displays 310 include a display for the user's left and right eyes.

The data processor 302 includes an image processor 306 (e.g., a video processor), a GPU & display driver 338, a tracking module 340, an interface 312, low-power circuitry 304, and high-speed circuitry 320. The components of the data processor 302 are interconnected by a bus 342.

The interface 312 refers to any source of a user command that is provided to the data processor 302. In one or more examples, the interface 312 is a physical button that, when depressed, sends a user input signal from the interface 312 to a low-power processor 314. A depression of such button followed by an immediate release may be processed by the low-power processor 314 as a request to capture a single image, or vice versa. A depression of such a button for a first period of time may be processed by the low-power processor 314 as a request to capture video data while the button is depressed, and to cease video capture when the button is released, with the video captured while the button was depressed stored as a single video file. Alternatively, depression of a button for an extended period of time may capture a still image. In some examples, the interface 312 may be any mechanical switch or physical interface capable of accepting user inputs associated with a request for data from the cameras 308. In other examples, the interface 312 may have a software component, or may be associated with a command received wirelessly from another source, such as from the user device 328.

The image processor 306 includes circuitry to receive signals from the cameras 308 and process those signals from the cameras 308 into a format suitable for storage in the memory 324 or for transmission to the user device 328. In one or more examples, the image processor 306 (e.g., video processor) comprises a microprocessor integrated circuit (IC) customized for processing sensor data from the cameras 308, along with volatile memory used by the microprocessor in operation.

The low-power circuitry 304 includes the low-power processor 314 and the low-power wireless circuitry 318. These elements of the low-power circuitry 304 may be implemented as separate elements or may be implemented on a single IC as part of a system on a single chip. The low-power processor 314 includes logic for managing the other elements of the glasses 100. As described above, for example, the low-power processor 314 may accept user input signals from the interface 312. The low-power processor 314 may also be configured to receive input signals or instruction communications from the user device 328 via the low-power wireless connection 336. The low-power wireless circuitry 318 includes circuit elements for implementing a low-power wireless communication system. Bluetooth^{™} Smart, also known as Bluetooth^{™} low energy, is one standard implementation of a low power wireless communication system that may be used to implement the low-power wireless circuitry 318. In other examples, other low power communication systems may be used.

The high-speed circuitry 320 includes a high-speed processor 322, a memory 324, and a high-speed wireless circuitry 326. The high-speed processor 322 may be any processor capable of managing high-speed communications and operation of any general computing system used for the data processor 302. The high-speed processor 322 includes processing resources used for managing high-speed data transfers on the high-speed wireless connection 334 using the high-speed wireless circuitry 326. In some examples, the high-speed processor 322 executes an operating system such as a LINUX operating system or other such operating system such as the operating system 1612 of FIG. 16. In addition to any other responsibilities, the high-speed processor 322 executing a software architecture for the data processor 302 is used to manage data transfers with the high-speed wireless circuitry 326. In some examples, the high-speed wireless circuitry 326 is configured to implement Institute of Electrical and Electronic Engineers (IEEE) 802.11 communication standards, also referred to herein as Wi-Fi. In other examples, other high-speed communications standards may be implemented by the high-speed wireless circuitry 326.

The memory 324 includes any storage device capable of storing camera data generated by the cameras 308 and the image processor 306. While the memory 324 is shown as integrated with the high-speed circuitry 320, in other examples, the memory 324 may be an independent standalone element of the data processor 302. In some such examples, electrical routing lines may provide a connection through a chip that includes the high-speed processor 322 from image processor 306 or the low-power processor 314 to the memory 324. In other examples, the high-speed processor 322 may manage addressing of the memory 324 such that the low-power processor 314 will boot the high-speed processor 322 any time that a read or write operation involving the memory 324 is desired.

The tracking module 340 estimates the position and orientation (the "pose") of the glasses 100. For example, the tracking module 340 uses image data and corresponding inertial data from the cameras 308 and the position components 1740, as well as GPS data, to track a location and determine a pose of the glasses 100 relative to a frame of reference (e.g., real-world environment). The tracking module 340 continually gathers and uses updated sensor data describing movements of the glasses 100 to determine updated three-dimensional poses of the glasses 100 that indicate changes in the relative position and orientation relative to physical objects in the real-world environment. The tracking module 340 permits visual placement of virtual objects relative to physical objects by the glasses 100 within the field of view of the user via the displays 310.

The GPU & display driver 338 may use the pose of the glasses 100 to generate frames of virtual content or other content to be presented on the displays 310 when the glasses 100 are functioning in a traditional augmented reality mode. In this mode, the GPU & display driver 338 generates updated frames of virtual content based on updated three-dimensional poses of the glasses 100, which reflect changes in the position and orientation of the user in relation to physical objects in the user's real-world environment.

One or more functions or operations described herein may also be performed in an application resident on the glasses 100 or on the user device 328, or on a remote server. For example, one or more functions or operations described herein may be performed by one of the applications 1606 such as messaging application 1646.

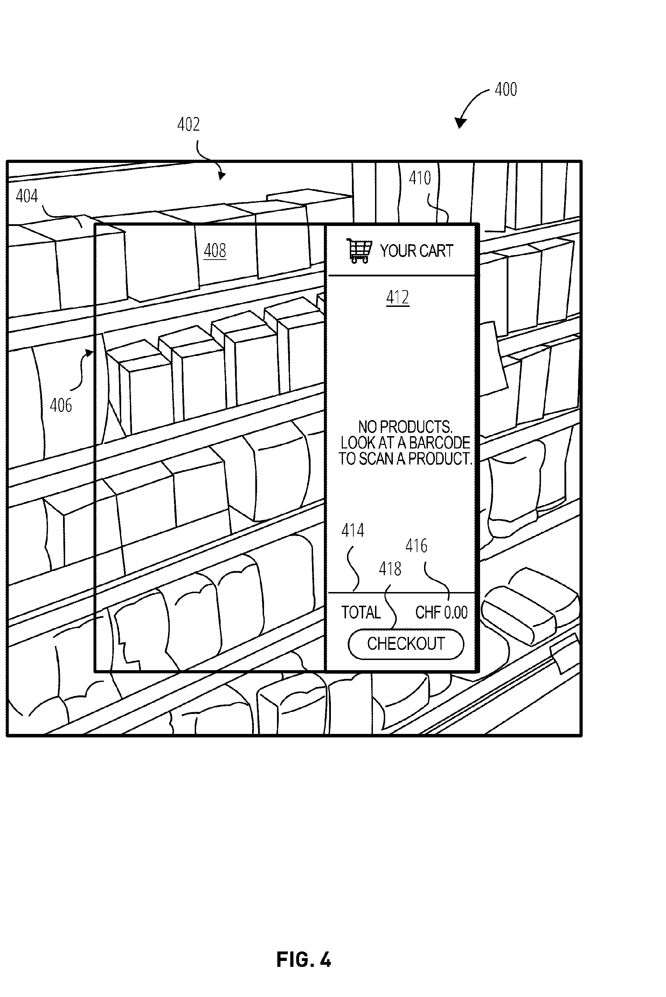

FIG. 4 illustrates a view 400 through the lenses of a head-worn device, such as glasses 100, according to some examples. The view 400 represents what is seen by a user of the glasses 100, and includes objects in the real world that are visible through the optical elements 108 and 110 of the glasses 100. In this case, the objects include products 404 that are available for purchase in a retail environment 402.

Overlaid on the retail environment 402, using at least one of the right near eye display 206 and left near eye display 216 is a shopping user interface 406. The user interface 406 includes an identified (boxed or shaded) scanning area 408 to indicate where product optical codes, such as barcodes, can be scanned in the field of view of the glasses 100, and a shopping cart 410. The shopping cart 410 includes a list area 412 and a total cost area 414 where the total cost of the items in the shopping cart 410 cart is listed. The list area 412 can toggle between a shopping list and a list of items that have been scanned by the user. The total cost area 414 includes the total cost 416 of the items in the shopping cart 410, and a checkout button 418 that can be selected when the user is ready to check out.

Upon arriving at the store, the user scans a QR or other machine-readable code or tag, such as an NFC tag, at the entrance to the store using the glasses 100 or the user device 328. The QR code includes information that identifies the store. A QR code may for example be scanned by the user positioning the glasses 100 such that the QR code is within the scanning area 408. In other examples, the store can be identified using other location or proximity alternatives, such as Bluetooth beacons or GPS.

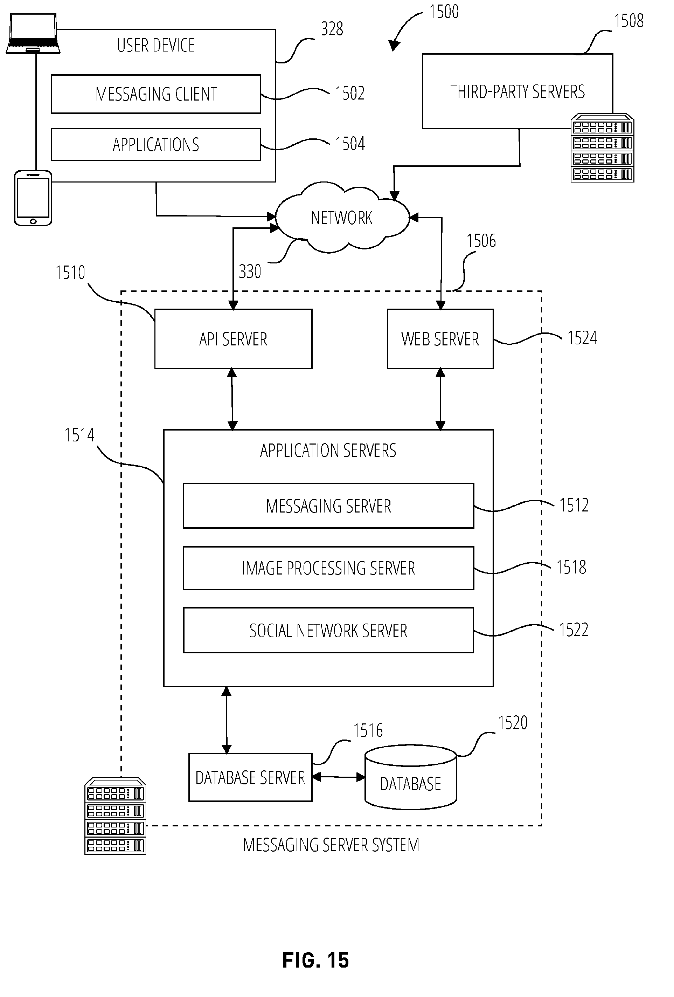

The user device 328 or glasses 100 uses the store's identifying information in the QR code or tag to obtain access to a list of products available at the store and each product's associated price. The information that is downloaded includes item identifiers for each product, such as the item name and optionally a graphic representation of the item such as a product photo, generic item icon such as a milk carton, or a logo. The list can be downloaded to the user device 328 or the glasses 100 for direct access, or can be available for as-needed access from a remote server such as database server 1516 or third-party server 1508 (see FIG. 15). Included with the list of items may be related information such as loyalty program discounts, nutritional information, a product graphic, special promotional considerations (e.g., buy two, get the third half off) and so forth.

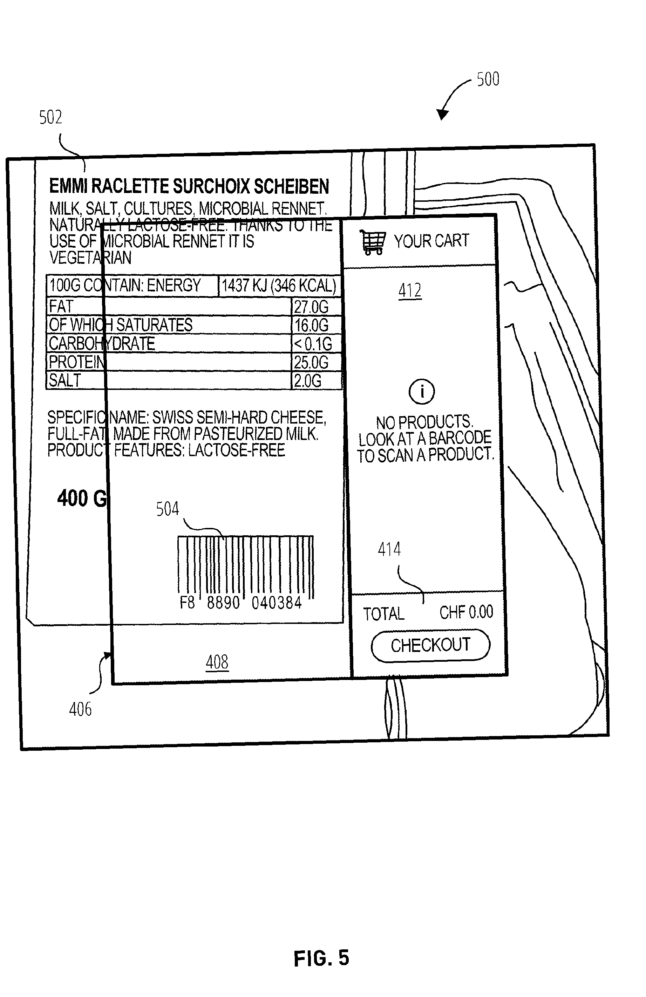

FIG. 5 illustrates a view through the lenses of a head-worn device, such as glasses 100, according to some examples. The view 500 shows that the list area 412 is currently empty of purchases, but it includes a prompt for the user to look at a barcode to scan a product. The user has moved a block of cheese 502 into the field of view of the glasses 100 so that its barcode 504 is within the scanning area 408.

The barcode 504 is captured by one of the cameras 308 and its presence detected and processed by the data processor 302 to identify and decode the barcode 504 information. The barcode information is then compared by the data processor 302 against the list of items, to obtain the relevant product information. To reduce the processing demands and thus the power demand on the glasses 100, the camera operates in a lower-resolution computer vision mode that provides sufficient resolution to allow the barcode 504 can be identified, but which is less than the resolution used for other image capture functions such as user-initiated photo or video capture. Additionally, to further reduce power consumption, images used for barcode detection are captured and scanned at a relatively low frequency that will provide adequate responsiveness for user experience, for example once every one to three seconds.

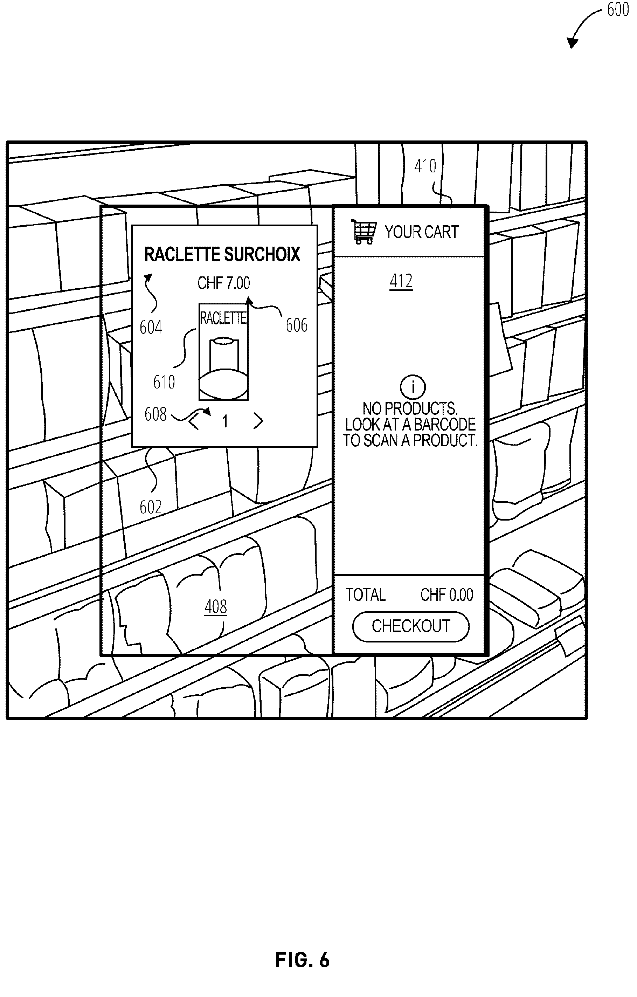

After decoding the barcode 504, the glasses 100 or user device 328 uses the information from the barcode 504 to identify the cheese 502 from the list of products available at the store, including its price and any related information such as ingredients or loyalty program discounts, or other discounts or promotions. The user interface 406 then transitions to the state shown in FIG. 6.

FIG. 6 illustrates a view through the lenses of a head-worn device, such as glasses 100, according to some examples. The view 600 shows that the list area 412 is still currently empty of purchases but that information regarding the cheese 502, including its name 604, price 606 and a product graphic 610 are shown in an information box 602 in the scanning area 408.

Also shown is a quantity 608 and left and right arrows bracketing the quantity 608, indicating that the user can adjust the quantity 608 by a forward or a rearward swipe on the touchpad 126 of the glasses 100. In response to a forward swipe, the quantity is increased, while in response to a rearward swipe, the quantity is decreased. The selected quantity can then be confirmed by a tap on the touchpad 126. In the event that the user does not want to purchase the item, the quantity can be set to zero, and after a confirming tap, the information box 602 will disappear without the item appearing in the list area 412.

Alternatively, if the user wishes to purchase more than one item, they can remove the barcode 504 from the scanning area 408 briefly, and then return it to the scanning area 408, which will either increment the quantity 608 by one if the information box 602 is still present, or display a new information box 602 if the original information box 602 has disappeared after the original item was transferred to the list area 412.

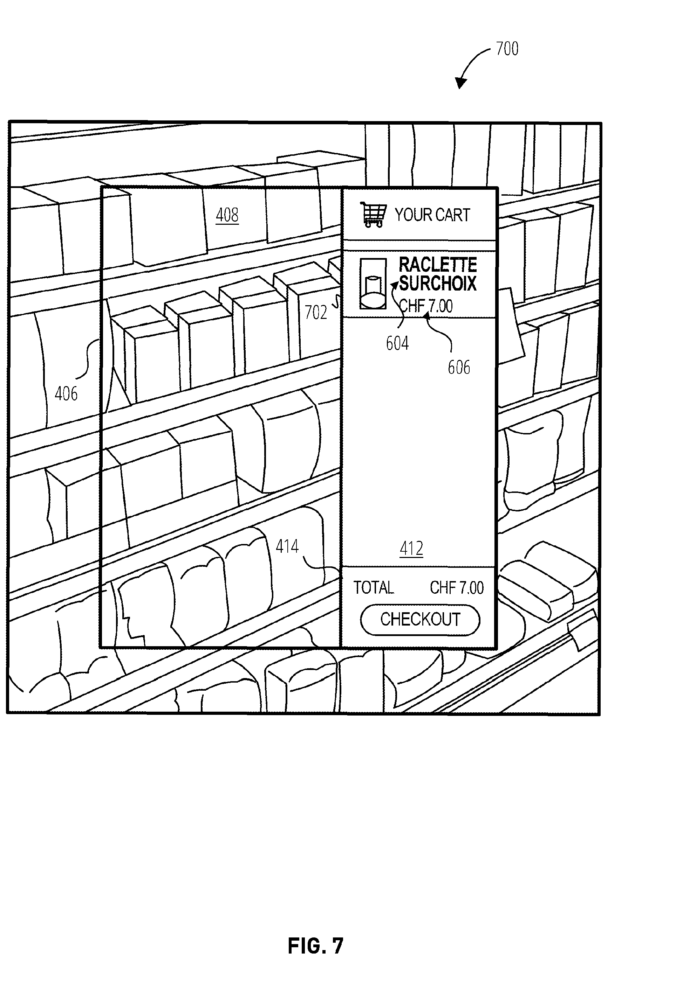

If the user wants to continue with the purchase, after a confirming tap, the information box 602 will disappear from the scanning area 408 and the item will appear in the list area 412 as shown in FIG. 7, with any adjustment to the quantity. The item will also be removed from the associated shopping list. As mentioned previously, the user can toggle between the shopping cart 410 and the shopping list to identify items still to be purchased. The shopping cart 410 is substantially identical to the shopping cart 410 except that it is entitled "Shopping List" and does not include the total cost area 414. The removal of an item from the shopping list based on the scanning and transfer of the item to the shopping cart 410 can be based on the matching of a specific item listed (such as a particular brand, package size and version of a product) or based on the general category, such as dishwashing detergent or cheese or eggs.

FIG. 7 illustrates a view through the lenses of a head-worn device, such as glasses 100, according to some examples. The view 700 shows that the user interface 406 has been updated from FIG. 6 such that the list area 412 includes an item 702 comprising the cheese 502 scanned in FIG. 6, including its name 604 and price 606, and the total cost area 414 has been updated to indicate the new total cost of the items in the shopping cart 410.

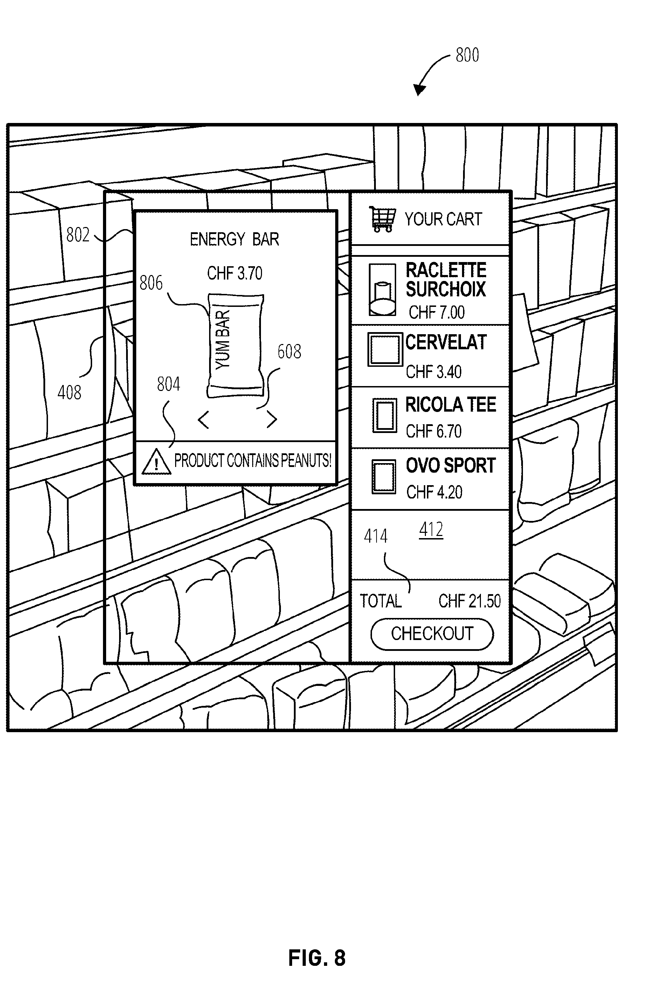

FIG. 8 illustrates a view through the lenses of a head-worn device, such as glasses 100, according to some examples. The view 800 shows the user interface 406 of FIG. 7 after a number of additional products have been scanned and added to the list area 412. The name, price and a graphic of each product is included, and the total cost area 414 has been updated to indicate the new total cost of the items in the shopping cart 410.

The scanning area 408 in this case includes an information box 802 indicating that an energy bar 806 has been scanned as a potential purchase. In this case however, the user's shopping profile specifies that the user has a nut allergy, and the glasses 100 or user device 328, by comparing the nutritional information for the energy bar 806 with the user's shopping profile, has identified that the energy bar 806 may be an item that the user does not actually wish to purchase.

A warning 804 has been provided in the information box 802, indicating that the product contains peanuts, and a blank or zero number of items has been indicated as a default value for the quantity 608. If the default zero number of items is not overridden, by user input on the touchpad 126 to increase the quantity 608 from zero, the information box 802 will disappear after a confirming tap on the touchpad 126 without the energy bar 806 appearing in the list area 412.

In the event that user input increasing the quantity is received and confirmed by a tap on the touchpad 126, the information box 802 will disappear from the scanning area 408 and the energy bar 806 will appear in the list area 412 with the other items.

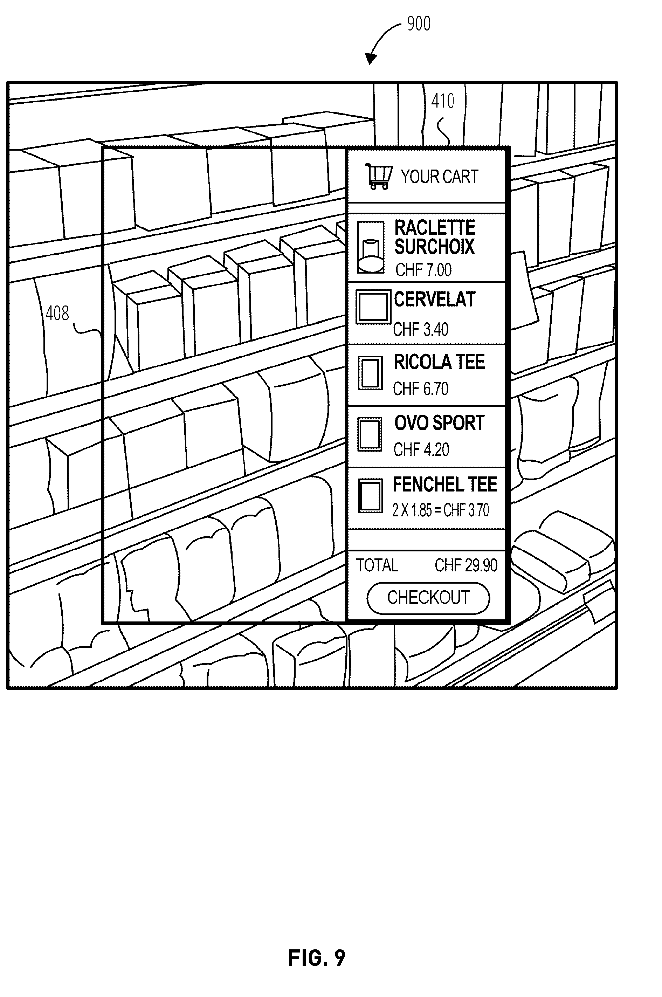

FIG. 9 illustrates a view 900 through the lenses of a head-worn device, such as glasses 100, according to some examples. The view 900 a shopping cart 410 including a number of items but nothing being scanned in the scanning area 408 and with no product information boxes. The user may for example be ready to check out and is reviewing the items in the shopping cart 410 before doing so, in order to verify completeness, adjust quantities, or remove items.

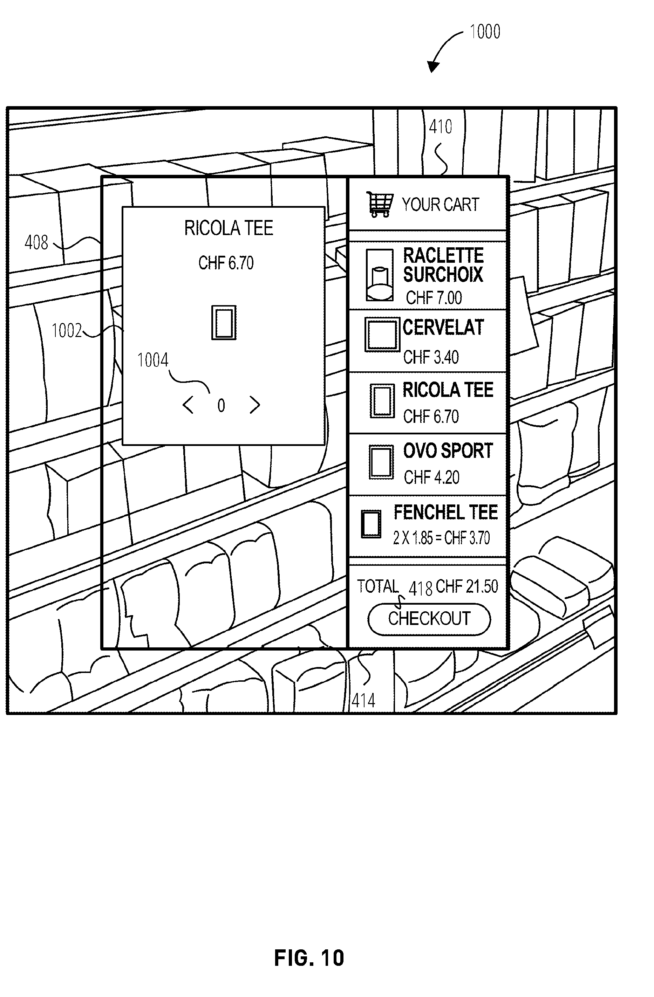

Items displayed in the shopping cart 410, as well as the checkout button 418, can be highlighted for selection upon receipt of an upward or downward touch on the touchpad 126 by the user. A selection of a highlighted item (or the checkout button 418) is then confirmed by receipt of a tap input on the touchpad 126 by the user. Selection of a highlighted item returns it to the scanning area 408 in an information box 602 as shown in FIG. 10.

FIG. 10 illustrates a view 1000 through the lenses of a head-worn device, such as glasses 100, according to some examples. The view 1000 has resulted from the selection of the Ricola Tee item in the shopping cart 410 in FIG. 9 by receipt of up/down user input on the touchpad 126 to highlight the item, followed by receipt of a confirming tap on the touchpad 126 to select the highlighted item.

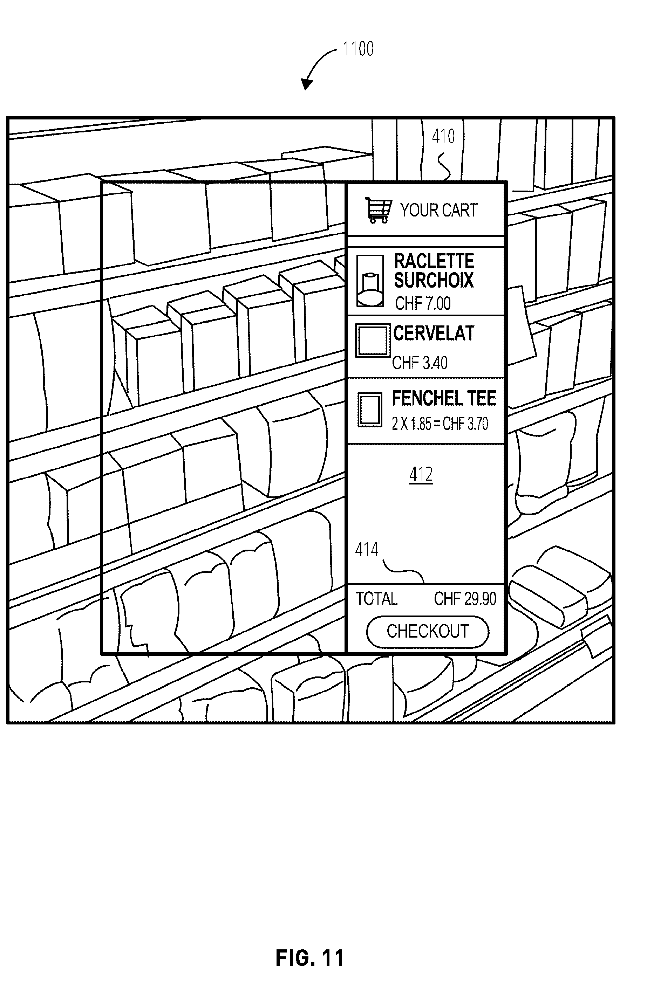

In response, an information box 1002 corresponding to the Ricola Tee is displayed in the scanning area 408. In this case, the user has decided not to buy the item, and has adjusted the quantity 1004 to zero. In response to receiving a confirming tap on the touchpad 126, the information box 1002 will be removed from the scanning area 408 and the corresponding item removed from the shopping cart 410, as shown in FIG. 11.

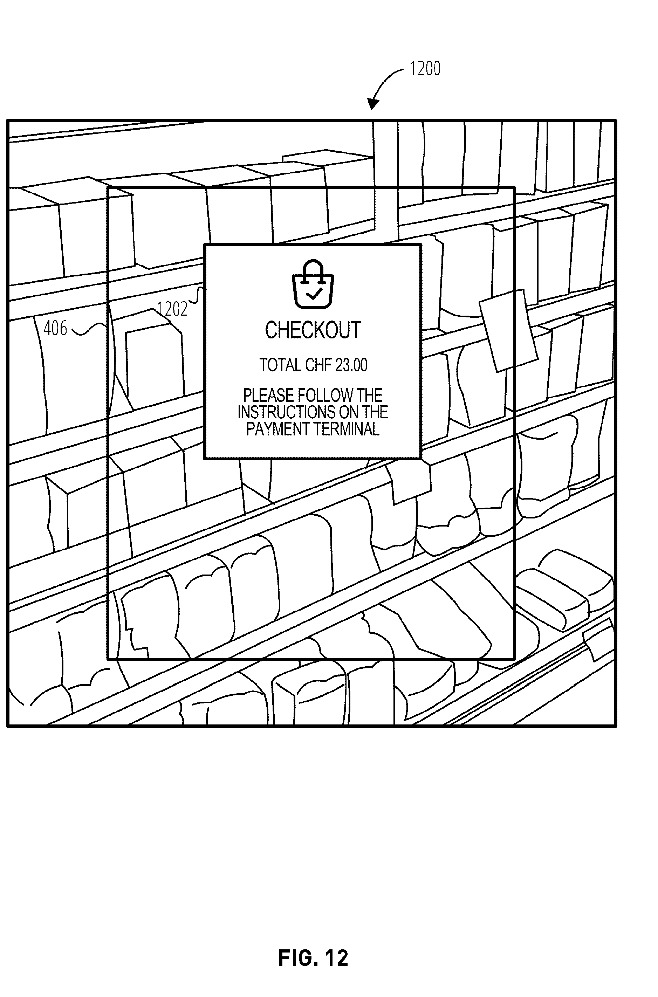

FIG. 11 illustrates a view 1100 through the lenses of a head-worn device, such as glasses 100, according to some examples. The view 1100 has resulted from removal of the Ricola Tee item from the shopping cart 410 as discussed with respect to FIG. 9. If user input of the checkout button 418 is now received, the view 1100 will transition to the view shown in FIG. 12.

FIG. 12 illustrates a view 1200 through the lenses of a head-worn device, such as glasses 100, according to some examples. The view 1200 has resulted from the selection by the user of the checkout button 418 in, for example, FIG. 9 or FIG. 11. The view 1200 includes a checkout notice 1202 in the user interface 406, which provides a total amount due and a prompt to follow the instructions on a payment terminal at the front of the store. The list of items in the shopping cart 410 may now for example be transmitted to the payment terminal by a short range data transmission protocol such as Bluetooth or NFC, or indirectly via the server system 332 or a third-party server 1508. In some examples, the user looks at the checkout terminal, which includes a QR code that includes information identifying the terminal. The terminal's identifying information and the final list of items is then transmitted to the server system 332 or a third-party server 1508, which then sends the final list of items and total amount, or just a payment prompt for the total, to the correct payment terminal.

The user then completes payment for the items using a known or future payment method, such as by credit or debit card at the terminal, or payment credentials maintained in the glasses 100 or the user device 328.

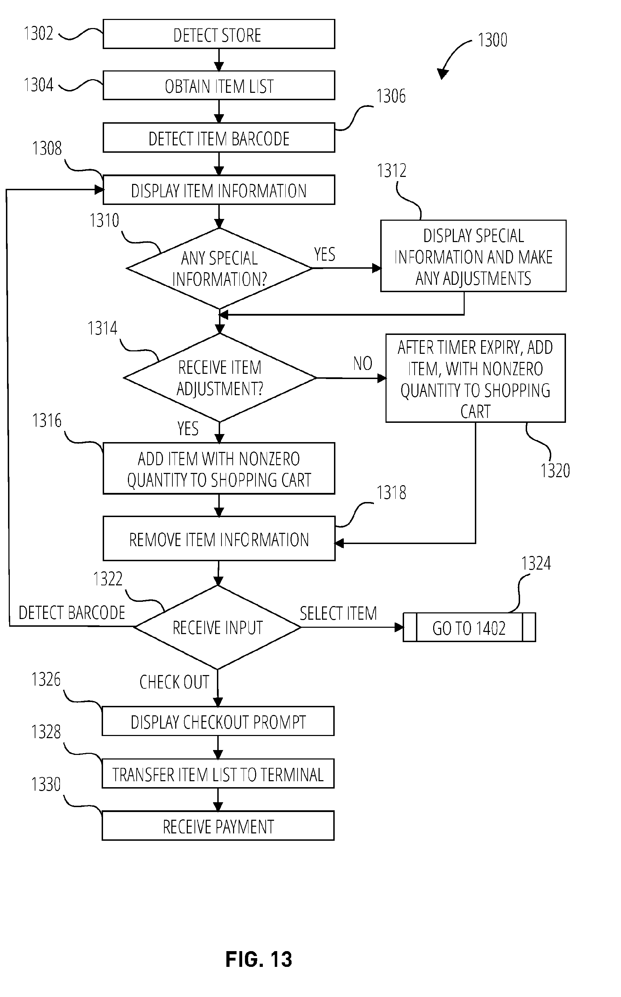

FIG. 13 is a flowchart 1300 illustrating a method of providing a shopping user interface, according to some examples. For explanatory purposes, the operations of the flowchart 1300 are described herein as occurring in serial, or linearly. However, multiple operations of the flowchart 1300 may occur in parallel. In addition, the operations of the flowchart 1300 need not be performed in the order shown and/or one or more blocks of the flowchart 1300 need not be performed and/or can be replaced by other operations.

Operations illustrated in FIG. 13 will typically execute on the glasses 100. In other examples, the operations are performed jointly between an application running on the user device 328 and the data processor 302 and associated hardware in or associated with the glasses 100. Various implementations are of course possible, with some of the operations taking place in server system 332, or with one application calling another application or SDK for required functionality.

The method commences at operation 1302, with the glasses 100 running an application such as shopping application 1634 (see FIG. 16), or mini program that provides the shopping cart functionality, which has been initiated by user selection of the shopping application 1634 or mini program.

In operation 1302, the identity of the store is detected, for example by the glasses scanning a QR code or NFT tag at the entrance to the store. In other examples, the glasses determine or receive other location or identifying information by the glasses 100, such as by determining the GPS location or receiving a transmission from an RF beacon. The identifying information in the QR code (or other identifying or location information) is transmitted to a remote server such as database server 1516 or third-party server 1508 (see FIG. 15), which provides access to a list of items available at the store and the price of each item in operation 1304. The list can be downloaded to the user device 328 or the glasses 100 for direct access, or can be available for as-needed access from the remote server. Included with the list of items may be related information such as loyalty program discounts, nutritional information, a product graphic, special promotional considerations (e.g., buy two, get the third half off) and so forth.

In operation 1306, the barcode 504 of an item is detected in the scanning area 408 in the field of view of the glasses 100. The barcode is decoded to determine product identifying information such as a Universal Product Code (UPC). The item information corresponding to the UPC is retrieved from the list of items, and item information is displayed in operation 1308 by the glasses 100 in the user interface 406. In some examples the information is displayed in an information boxes 602.

The item information is also compared to preferences, allergies or other user specific information in the user's profile in operation 1310, in operation 1312, and any item information that is user-specific (such as an ingredients warning) is included with the information displayed in operation 1308. Additionally, in operation 1312, any adjustments are made, such as setting the quantity of an item with allergy-causing ingredients to zero. Special information displayed in operation 1312 may include promotions or discounts for the item.

In operation 1314, any user input adjustments to the default quantity (typically one) are received by the glasses 100 and confirmed with a tap on the touchpad 126. In operation 1316, any item with a non-zero quantity is added to the shopping cart 410 with its associated quantity. The total cost 416 in the total cost area 414 is updated to include the new addition(s). If an item adjustment is not received in operation 1314, then after receiving a confirming tap on the touchpad or a certain amount of time has elapsed (the expiry of a brief timer set by the glasses 100, that is sufficient to allow the user to adjust the item quantity without distracting from the shopping experience, such as three to five seconds) or a further barcode is scanned, any item with a non-zero quantity is added to the shopping cart 410 with its associated quantity in operation 1320. The flowchart 1300 then proceeds at operation 1318, where the display of the item information from operation 1308 is removed from the user interface 406.

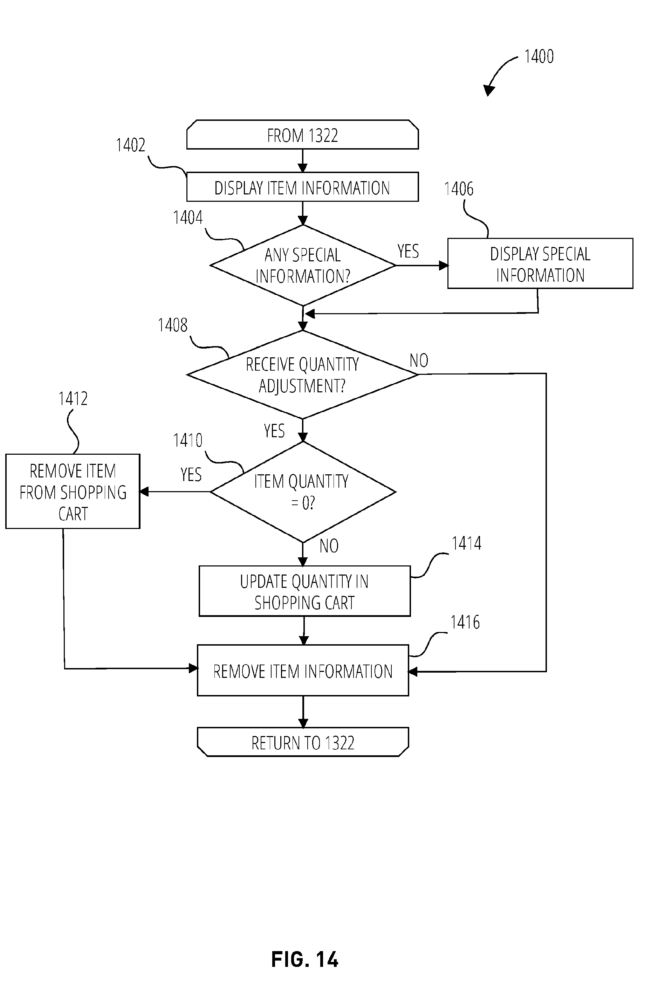

In operation 1322, further user input is received. This further input can include the detection of another barcode in the scanning area 408, selection of an item in the shopping cart 410 for quantity editing or removal, or selection of the checkout button 418. If a further barcode is detected in operation 1322, then the method returns to operation 1308 for the display of item information, and the method proceeds from there. If an item is selected, then in in operation 1324 the flowchart proceeds to operation 1402 in FIG. 14.

As discussed above, upon receipt of selection of the checkout button 418, in operation 1326 the glasses display a checkout prompt that provides a total amount due and a prompt to follow the instructions on a payment terminal at the front of the store. The list of items in the shopping cart is then transferred to a payment terminal in operation 1328. The list of items in the shopping cart 410 may for example be transmitted to the payment terminal by a short range data transmission protocol such as Bluetooth or NFC, or indirectly via a remote server. In some examples, the user looks at the checkout terminal, which includes a QR code that includes information identifying the terminal that is scanned by the glasses 100. The terminal's identifying information and the final list of items is then transmitted by the glasses 100 or the user device 328 to a remote server, which then sends the final list of items and total amount, or just a payment prompt for the total, to the correct payment terminal.

In operation 1330, the user then completes payment for the items using a known or future payment method, such as by credit or debit card at the terminal, or using payment credentials maintained in the glasses 100 or the user device 328.

FIG. 14 is a flowchart 1400 illustrating a method of providing a shopping user interface, according to some examples. For explanatory purposes, the operations of the flowchart 1400 are described herein as occurring in serial, or linearly. However, multiple operations of the flowchart 1400 may occur in parallel. In addition, the operations of the flowchart 1400 need not be performed in the order shown and/or one or more blocks of the flowchart 1400 need not be performed and/or can be replaced by other operations.

Operations illustrated in FIG. 14 will typically execute on the glasses 100. In other examples, the operations are performed jointly between an application running on the user device 328 and the data processor 302 and associated hardware in or associated with the glasses 100. For the purposes of clarity, flowchart 1400 is discussed herein with reference to such an example. Various implementations are of course possible, with some of the operations taking place in server system 332, or with one application calling another application or SDK for required functionality.

The method commences at operation 1402, in which item information corresponding to item from the shopping cart 410, selected in operation 1322 in FIG. 13, is displayed in operation 1308. As before, the item information is also compared to the preferences, allergies or other user specific information in the user's profile in operation 1404, and any item information that is user-specific is included with the information displayed in operation 1406. Also, any information about special offers or promotions or discounts associated with the selected item is included with the information displayed in operation 1406 as before.

If any item quantity adjustment is received in operation 1408, the flowchart 1400 proceeds to operation 1410. If an item adjustment is not received in operation 1408, then after a receiving a confirming tap on the touchpad, the display of the item information from operation 1308 is removed from the user interface 406.

In operation 1410, if the item quantity has been adjusted to zero and a confirming tap on the touchpad is received, then the item is removed from the shopping cart in operation 1412. The display of the item information is removed from the scanning area 408 in operation 1416, and the flowchart returns to operation 1322 in FIG. 13. If the adjusted item quantity is not zero in operation 1410, then, after receiving a confirming tap on the touchpad, the total cost 416 in the total cost area 414 is updated to reflect the new quantity in operation 1414. Then the flowchart 1400 proceeds at operation 1416, where the display of the item information is removed from the user interface 406, and the flowchart returns to operation 1322 in FIG. 13.

FIG. 15 is a block diagram showing an example messaging system 1500 for exchanging data (e.g., messages and associated content) over a network. The messaging system 1500 includes multiple instances of a user device 328 which host a number of applications, including a messaging client 1502 and other applications 1504. A messaging client 1502 is communicatively coupled to other instances of the messaging client 1502 (e.g., hosted on respective other user devices 328), a messaging server system 1506 and third-party servers 1508 via a network 330 (e.g., the Internet). A messaging client 1502 can also communicate with locally-hosted applications 1504 using Application Program Interfaces (APIs).

A messaging client 1502 is able to communicate and exchange data with other messaging clients 1502 and with the messaging server system 1506 via the network 330. The data exchanged between messaging clients 1502, and between a messaging client 1502 and the messaging server system 1506, includes functions (e.g., commands to invoke functions) as well as payload data (e.g., text, audio, video or other multimedia data).

The messaging server system 1506 provides server-side functionality via the network 330 to a particular messaging client 1502. While some functions of the messaging system 1500 are described herein as being performed by either a messaging client 1502 or by the messaging server system 1506, the location of some functionality either within the messaging client 1502 or the messaging server system 1506 may be a design choice. For example, it may be technically preferable to initially deploy some technology and functionality within the messaging server system 1506 but to later migrate this technology and functionality to the messaging client 1502 where a user device 328 has sufficient processing capacity.

The messaging server system 1506 supports various services and operations that are provided to the messaging client 1502. Such operations include transmitting data to, receiving data from, and processing data generated by the messaging client 1502. This data may include message content, user device information, geolocation information, media augmentation and overlays, message content persistence conditions, social network information, and live event information, as examples. Data exchanges within the messaging system 1500 are invoked and controlled through functions available via user interfaces (UIs) of the messaging client 1502.

Turning now specifically to the messaging server system 1506, an Application Program Interface (API) server 1510 is coupled to, and provides a programmatic interface to, application servers 1514. The application servers 1514 are communicatively coupled to a database server 1516, which facilitates access to a database 1520 that stores data associated with messages processed by the application servers 1514. Similarly, a web server 1524 is coupled to the application servers 1514, and provides web-based interfaces to the application servers 1514. To this end, the web server 1524 processes incoming network requests over the Hypertext Transfer Protocol (HTTP) and several other related protocols.

The Application Program Interface (API) server 1510 receives and transmits message data (e.g., commands and message payloads) between the user device 328 and the application servers 1514. Specifically, the Application Program Interface (API) server 1510 provides a set of interfaces (e.g., routines and protocols) that can be called or queried by the messaging client 1502 in order to invoke functionality of the application servers 1514. The Application Program Interface (API) server 1510 exposes various functions supported by the application servers 1514, including account registration, login functionality, the sending of messages, via the application servers 1514, from a particular messaging client 1502 to another messaging client 1502, the sending of media files (e.g., images or video) from a messaging client 1502 to a messaging server 1512, and for possible access by another messaging client 1502, the settings of a collection of media data (e.g., story), the retrieval of a list of friends of a user of a user device 328, the retrieval of such collections, the retrieval of messages and content, the addition and deletion of entities (e.g., friends) to an entity graph (e.g., a social graph), the location of friends within a social graph, and opening an application event (e.g., relating to the messaging client 1502).

The application servers 1514 host a number of server applications and subsystems, including for example a messaging server 1512, an image processing server 1518, and a social network server 1522. The messaging server 1512 implements a number of message processing technologies and functions, particularly related to the aggregation and other processing of content (e.g., textual and multimedia content) included in messages received from multiple instances of the messaging client 1502. As will be described in further detail, the text and media content from multiple sources may be aggregated into collections of content (e.g., called stories or galleries). These collections are then made available to the messaging client 1502. Other processor and memory intensive processing of data may also be performed server-side by the messaging server 1512, in view of the hardware requirements for such processing.

The application servers 1514 also include an image processing server 1518 that is dedicated to performing various image processing operations, typically with respect to images or video within the payload of a message sent from or received at the messaging server 1512.

The social network server 1522 supports various social networking functions and services and makes these functions and services available to the messaging server 1512. To this end, the social network server 1522 maintains and accesses an entity graph within the database 1520. Examples of functions and services supported by the social network server 1522 include the identification of other users of the messaging system 1500 with which a particular user has relationships or is "following," and also the identification of other entities and interests of a particular user.

The messaging client 1502 can notify a user of the user device 328, or other users related to such a user (e.g., "friends"), of activity taking place in shared or shareable sessions. For example, the messaging client 1502 can provide participants in a conversation (e.g., a chat session) in the messaging client 1502 with notifications relating to the current or recent use of a game by one or more members of a group of users. One or more users can be invited to join in an active session or to launch a new session. In some examples, shared sessions can provide a shared augmented reality experience in which multiple people can collaborate or participate.

FIG. 16 is a block diagram 1600 illustrating a software architecture 1604, which can be installed on any one or more of the devices described herein. The software architecture 1604 is supported by hardware such as a machine 1602 that includes processors 1620, memory 1626, and I/O components 1638. In this example, the software architecture 1604 can be conceptualized as a stack of layers, where individual layers provides a particular functionality. The software architecture 1604 includes layers such as an operating system 1612, libraries 1608, frameworks 1610, and applications 1606. Operationally, the applications 1606 invoke API calls 1650 through the software stack and receive messages 1652 in response to the API calls 1650.

The operating system 1612 manages hardware resources and provides common services. The operating system 1612 includes, for example, a kernel 1614, services 1616, and drivers 1622. The kernel 1614 acts as an abstraction layer between the hardware and the other software layers. For example, the kernel 1614 provides memory management, processor management (e.g., scheduling), component management, networking, and security settings, among other functionalities. The services 1616 can provide other common services for the other software layers. The drivers 1622 are responsible for controlling or interfacing with the underlying hardware. For instance, the drivers 1622 can include display drivers, camera drivers, BLUETOOTH^{®} or BLUETOOTH^{®} Low Energy drivers, flash memory drivers, serial communication drivers (e.g., Universal Serial Bus (USB) drivers), WI-FI^{®} drivers, audio drivers, power management drivers, and so forth.

The libraries 1608 provide a low-level common infrastructure used by the applications 1606. The libraries 1608 can include system libraries 1618 (e.g., C standard library) that provide functions such as memory allocation functions, string manipulation functions, mathematic functions, and the like. In addition, the libraries 1608 can include API libraries 1624 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) graphic content on a display, GLMotif used to implement 3D user interfaces), image feature extraction libraries (e.g., OpenIMAJ), database libraries (e.g., SQLite to provide various relational database functions), web libraries (e.g., WebKit to provide web browsing functionality), and the like. The libraries 1608 can also include a wide variety of other libraries 1628 to provide many other APIs to the applications 1606.

The frameworks 1610 provide a high-level common infrastructure that is used by the applications 1606. For example, the frameworks 1610 provide various graphical user interface (GUI) functions, high-level resource management, and high-level location services. The frameworks 1610 can provide a broad spectrum of other APIs that can be used by the applications 1606, some of which may be specific to a particular operating system or platform.

In an example, the applications 1606 may include a home application 1636, a contacts application 1630, a browser application 1632, a shopping application 1634, a location application 1642, a media application 1644, a messaging application 1646, a game application 1648, and a broad assortment of other applications such as third-party Applications 1640. The applications 1606 are programs that execute functions defined in the programs. Various programming languages can be employed to create one or more of the applications 1606, structured in a variety of manners, such as object-oriented programming languages (e.g., Objective-C, Java, or C++) or procedural programming languages (e.g., C or assembly language). In a specific example, the third-party Applications 1640 (e.g., applications developed using the ANDROID^{™} or IOS^{™} software development kit (SDK) by an entity other than the vendor of the particular platform) may be mobile software running on a mobile operating system such as IOS^{™} ANDROID^{™}, WINDOWS^{®} Phone, or another mobile operating system. In this example, the third-party Applications 1640 can invoke the API calls 1650 provided by the operating system 1612 to facilitate functionality described herein.

FIG. 17 is a diagrammatic representation of a machine 1700 within which instructions 1710 (e.g., software, a program, an application, an applet, an app, or other executable code) for causing the machine 1700 to perform any one or more of the methodologies discussed herein may be executed. For example, the instructions 1710 may cause the machine 1700 to execute any one or more of the methods described herein. The instructions 1710 transform the general, non-programmed machine 1700 into a particular machine 1700 programmed to carry out the described and illustrated functions in the manner described. The machine 1700 may operate as a standalone device or may be coupled (e.g., networked) to other machines. In a networked deployment, the machine 1700 may operate in the capacity of a server machine or a client machine in a server-client network environment, or as a peer machine in a peer-to-peer (or distributed) network environment. The machine 1700 may comprise, but not be limited to, a server computer, a client computer, a personal computer (PC), a tablet computer, a laptop computer, a netbook, a set-top box (STB), a PDA, an entertainment media system, a cellular telephone, a smart phone, a mobile device, a head-worn device (e.g., a smart watch), a smart home device (e.g., a smart appliance), other smart devices, a web appliance, a network router, a network switch, a network bridge, or any machine capable of executing the instructions 1710, sequentially or otherwise, that specify actions to be taken by the machine 1700. Further, while a single machine 1700 is illustrated, the term "machine" may also be taken to include a collection of machines that individually or jointly execute the instructions 1710 to perform any one or more of the methodologies discussed herein.

The machine 1700 may include processors 1702, memory 1704, and I/O components 1706, which may be configured to communicate with one another via a bus 1744. In an example, the processors 1702 (e.g., a Central Processing Unit (CPU), a Reduced Instruction Set Computing (RISC) processor, a Complex Instruction Set Computing (CISC) processor, a Graphics Processing Unit (GPU), a Digital Signal Processor (DSP), an ASIC, a Radio-Frequency Integrated Circuit (RFIC), another processor, or any suitable combination thereof) may include, for example, a processor 1708 and a processor 1712 that execute the instructions 1710. The term "processor" is intended to include multi-core processors that may comprise two or more independent processors (sometimes referred to as "cores") that may execute instructions contemporaneously. Although FIG. 17 shows multiple processors 1702, the machine 1700 may include a single processor with a single core, a single processor with multiple cores (e.g., a multi-core processor), multiple processors with a single core, multiple processors with multiples cores, or any combination thereof.

The memory 1704 includes a main memory 1714, a static memory 1716, and a storage unit 1718, both accessible to the processors 1702 via the bus 1744. The main memory 1704, the static memory 1716, and storage unit 1718 store the instructions 1710 embodying any one or more of the methodologies or functions described herein. The instructions 1710 may also reside, completely or partially, within the main memory 1714, within the static memory 1716, within machine-readable medium 1720 within the storage unit 1718, within one or more of the processors 1702 (e.g., within the processor's cache memory), or any suitable combination thereof, during execution thereof by the networked system 300.

The I/O components 1706 may include a wide variety of components to receive input, provide output, produce output, transmit information, exchange information, capture measurements, and so on. The specific I/O components 1706 that are included in a particular machine will depend on the type of machine. For example, portable machines such as mobile phones may include a touch input device or other such input mechanisms, while a headless server machine will likely not include such a touch input device. It will be appreciated that the I/O components 1706 may include many other components that are not shown in FIG. 17. In various examples, the I/O components 1706 may include output components 1728 and input components 1732. The output components 1728 may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 1732 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further examples, the I/O components 1706 may include biometric components 1734, motion components 1736, environmental components 1738, or position components 1740, among a wide array of other components. For example, the biometric components 1734 include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 1736 include acceleration sensor components (e.g., accelerometer), gravitation sensor components, rotation sensor components (e.g., gyroscope), and so forth. The environmental components 1738 include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detection concentrations of hazardous gases for safety or to measure pollutants in the atmosphere), or other components that may provide indications, measurements, or signals corresponding to a surrounding physical environment. The position components 1740 include location sensor components (e.g., a GPS receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 1706 further include communication components 1742 operable to couple the networked system 300 to a network 1722 or devices 1724 via a coupling 1730 and a coupling 1726, respectively. For example, the communication components 1742 may include a network interface component or another suitable device to interface with the network 1722. In further examples, the communication components 1742 may include wired communication components, wireless communication components, cellular communication components, Near Field Communication (NFC) components, Bluetooth^{®} components (e.g., Bluetooth^{®} Low Energy), Wi-Fi^{®} components, and other communication components to provide communication via other modalities. The devices 1724 may be another machine or any of a wide variety of peripheral devices (e.g., a peripheral device coupled via a USB).

Moreover, the communication components 1742 may detect identifiers or include components operable to detect identifiers. For example, the communication components 1742 may include Radio Frequency Identification (RFID) tag reader components, NFC smart tag detection components, optical reader components (e.g., an optical sensor to detect one-dimensional bar codes such as Universal Product Code (UPC) bar code, multidimensional bar codes such as Quick Response (QR) code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 1742, such as location via Internet Protocol (IP) geolocation, location via Wi-Fi^{®} signal triangulation, location via detecting an NFC beacon signal that may indicate a particular location, and so forth.

The various memories (e.g., memory 1704, main memory 1714, static memory 1716, and/or memory of the processors 1702) and/or storage unit 1718 may store one or more sets of instructions and data structures (e.g., software) embodying or used by any one or more of the methodologies or functions described herein. These instructions (e.g., the instructions 1710), when executed by processors 1702, cause various operations to implement the disclosed examples.

The instructions 1710 may be transmitted or received over the network 1722, using a transmission medium, via a network interface device (e.g., a network interface component included in the communication components 1742) and using any one of a number of well-known transfer protocols (e.g., hypertext transfer protocol (HTTP)). Similarly, the instructions 1710 may be transmitted or received using a transmission medium via the coupling 1726 (e.g., a peer-to-peer coupling) to the devices 1724.

A "carrier signal" refers to any intangible medium that is capable of storing, encoding, or carrying instructions for execution by the machine, and includes digital or analog communications signals or other intangible media to facilitate communication of such instructions. Instructions may be transmitted or received over a network using a transmission medium via a network interface device.

A "user device" or "client device" refers to any machine that interfaces to a communications network to obtain resources from one or more server systems or other user or client devices. A user or client device may be, but is not limited to, a mobile phone, desktop computer, laptop, portable digital assistants (PDAs), smartphones, tablets, ultrabooks, netbooks, laptops, multi-processor systems, microprocessor-based or programmable consumer electronics, game consoles, set-top boxes, or any other communication device that a user may use to access a network.

A "communication network" refers to one or more portions of a network that may be an ad hoc network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi^{®} network, another type of network, or a combination of two or more such networks. For example, a network or a portion of a network may include a wireless or cellular network and the coupling may be a Code Division Multiple Access (CDMA) connection, a Global System for Mobile communications (GSM) connection, or other types of cellular or wireless coupling. In this example, the coupling may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard-setting organizations, other long-range protocols, or other data transfer technology.

A "component" refers to a device, physical entity, or logic having boundaries defined by function or subroutine calls, branch points, APIs, or other technologies that provide for the partitioning or modularization of particular processing or control functions. Components may be combined via their interfaces with other components to carry out a machine process. A component may be a packaged functional hardware unit designed for use with other components and a part of a program that usually performs a particular function of related functions. Components may constitute either software components (e.g., code embodied on a machine-readable medium) or hardware components. A "hardware component" is a tangible unit capable of performing some operations and may be configured or arranged in a particular physical manner. In various examples, one or more computer systems (e.g., a standalone computer system, a client computer system, or a server computer system) or one or more hardware components of a computer system (e.g., a processor or a group of processors) may be configured by software (e.g., an application or application portion) as a hardware component that operates to perform some operations as described herein. A hardware component may also be implemented mechanically, electronically, or any suitable combination thereof. For example, a hardware component may include dedicated circuitry or logic that is permanently configured to perform some operations. A hardware component may be a special-purpose processor, such as a field-programmable gate array (FPGA) or an Application Specific Integrated Circuit (ASIC). A hardware component may also include programmable logic or circuitry that is temporarily configured by software to perform some operations. For example, a hardware component may include software executed by a general-purpose processor or other programmable processor. Once configured by such software, hardware components become specific machines (or specific components of a machine) tailored to perform the configured functions and are no longer general-purpose processors. It will be appreciated that the decision to implement a hardware component mechanically, in dedicated and permanently configured circuitry, or in temporarily configured circuitry (e.g., configured by software), may be driven by cost and time considerations. Accordingly, the phrase "hardware component"(or "hardware-implemented component") is to be understood to encompass a tangible entity, be that an entity that is physically constructed, permanently configured (e.g., hardwired), or temporarily configured (e.g., programmed) to operate in a particular manner or to perform some operations described herein. Considering examples in which hardware components are temporarily configured (e.g., programmed), the hardware components may not be configured or instantiated at any one instance in time. For example, where a hardware component comprises a general-purpose processor configured by software to become a special-purpose processor, the general-purpose processor may be configured as respectively different special-purpose processors (e.g., comprising different hardware components) at different times. Software accordingly configures a particular processor or processors, for example, to constitute a particular hardware component at one instance of time and to constitute a different hardware component at a different instance of time. Hardware components can provide information to, and receive information from, other hardware components. Accordingly, the described hardware components may be regarded as being communicatively coupled. Where multiple hardware components exist contemporaneously, communications may be achieved through signal transmission (e.g., over appropriate circuits and buses) between or among two or more of the hardware components. **In** examples in which multiple hardware components are configured or instantiated at different times, communications between such hardware components may be achieved, for example, through the storage and retrieval of information in memory structures to which the multiple hardware components have access. For example, one hardware component may perform an operation and store the output of that operation in a memory device to which it is communicatively coupled. A further hardware component may then, at a later time, access the memory device to retrieve and process the stored output. Hardware components may also initiate communications with input or output devices, and can operate on a resource (e.g., a collection of information). The various operations of example methods described herein may be performed by one or more processors that are temporarily configured (e.g., by software) or permanently configured to perform the relevant operations. Whether temporarily or permanently configured, such processors may constitute processor-implemented components that operate to perform one or more operations or functions described herein. As used herein, "processor-implemented component" refers to a hardware component implemented using one or more processors. Similarly, the methods described herein may be partially processor-implemented, with a particular processor or processors being an example of hardware. For example, some of the operations of a method may be performed by one or more processors or processor-implemented components. Moreover, the one or more processors may also operate to support performance of the relevant operations in a "cloud computing" environment or as a "software as a service" (SaaS). For example, at some of the operations may be performed by a group of computers (as examples of machines including processors), with these operations being accessible via a network (e.g., the Internet) and via one or more appropriate interfaces (e.g., an API). The performance of some of the operations may be distributed among the processors, residing within a single machine as well as being deployed across a number of machines. In some examples, the processors or processor-implemented components may be located in a single geographic location (e.g., within a home environment, an office environment, or a server farm). In other examples, the processors or processor-implemented components may be distributed across a number of geographic locations.

A "computer-readable medium" refers to both machine-storage media and transmission media. Thus, the terms include both storage devices/media and carrier waves/modulated data signals. The terms "machine-readable medium," "computer-readable medium" and "device-readable medium" mean the same thing and may be used interchangeably in this disclosure.

A "machine-storage medium" refers to a single or multiple storage devices and/or media (e.g., a centralized or distributed database, and/or associated caches and servers) that store executable instructions, routines and/or data. The term includes, but not be limited to, solid-state memories, and optical and magnetic media, including memory internal or external to processors. Specific examples of machine-storage media, computer-storage media and/or device-storage media include non-volatile memory, including by way of example semiconductor memory devices, e.g., erasable programmable read-only memory (EPROM), electrically erasable programmable read-only memory (EEPROM), FPGA, and flash memory devices; magnetic disks such as internal hard disks and removable disks; magneto-optical disks; and CD-ROM and DVD-ROM disks The terms "machine-storage medium," "device-storage medium," "computer-storage medium" mean the same thing and may be used interchangeably in this disclosure. The terms "machine-storage media," "computer-storage media," and "device-storage media" specifically exclude carrier waves, modulated data signals, and other such media, at some of which are covered under the term "signal medium."

A "processor" refers to any circuit or virtual circuit (a physical circuit emulated by logic executing on an actual processor) that manipulates data values according to control signals (e.g., "commands", "op codes", "machine code", and so forth) and which produces corresponding output signals that are applied to operate a machine. A processor may, for example, be a Central Processing Unit (CPU), a Reduced Instruction Set Computing (RISC) processor, a Complex Instruction Set Computing (CISC) processor, a Graphics Processing Unit (GPU), a Digital Signal Processor (DSP), an Application Specific Integrated Circuit (ASIC), a Radio-Frequency Integrated Circuit (RFIC) or any combination thereof. A processor may further be a multi-core processor having two or more independent processors (sometimes referred to as "cores") that may execute instructions contemporaneously.

A "signal medium" refers to any intangible medium that is capable of storing, encoding, or carrying the instructions for execution by a machine and includes digital or analog communications signals or other intangible media to facilitate communication of software or data. The term "signal medium" may be taken to include any form of a modulated data signal, carrier wave, and so forth. The term "modulated data signal" means a signal that has one or more of its characteristics set or changed in such a matter as to encode information in the signal. The terms "transmission medium" and "signal medium" mean the same thing and may be used interchangeably in this disclosure.

Changes and modifications may be made to the disclosed examples without departing from the scope of the present disclosure. These and other changes or modifications are intended to be included within the scope of the present disclosure, as expressed in the following claims.

A "carrier signal" refers to any intangible medium that is capable of storing, encoding, or carrying instructions for execution by the machine, and includes digital or analog communications signals or other intangible media to facilitate communication of such instructions. Instructions may be transmitted or received over a network using a transmission medium via a network interface device.

A "user device" or "client device" refers to any machine that interfaces to a communications network to obtain resources from one or more server systems or other user or client devices. A user or client device may be, but is not limited to, a mobile phone, desktop computer, laptop, portable digital assistants (PDAs), smartphones, tablets, ultrabooks, netbooks, laptops, multi-processor systems, microprocessor-based or programmable consumer electronics, game consoles, set-top boxes, or any other communication device that a user may use to access a network.

A "communication network" refers to one or more portions of a network that may be an ad hoc network, an intranet, an extranet, a virtual private network (VPN), a local area network (LAN), a wireless LAN (WLAN), a wide area network (WAN), a wireless WAN (WWAN), a metropolitan area network (MAN), the Internet, a portion of the Internet, a portion of the Public Switched Telephone Network (PSTN), a plain old telephone service (POTS) network, a cellular telephone network, a wireless network, a Wi-Fi^{®} network, another type of network, or a combination of two or more such networks. For example, a network or a portion of a network may include a wireless or cellular network and the coupling may be a Code Division Multiple Access (CDMA) connection, a Global System for Mobile communications (GSM) connection, or other types of cellular or wireless coupling. In this example, the coupling may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High Speed Packet Access (HSPA), Worldwide Interoperability for Microwave Access (WiMAX), Long Term Evolution (LTE) standard, others defined by various standard-setting organizations, other long-range protocols, or other data transfer technology.

A "component" refers to a device, physical entity, or logic having boundaries defined by function or subroutine calls, branch points, APIs, or other technologies that provide for the partitioning or modularization of particular processing or control functions. Components may be combined via their interfaces with other components to carry out a machine process. A component may be a packaged functional hardware unit designed for use with other components and a part of a program that usually performs a particular function of related functions. Components may constitute either software components (e.g., code embodied on a machine-readable medium) or hardware components. A "hardware component" is a tangible unit capable of performing some operations and may be configured or arranged in a particular physical manner. **In** various examples, one or more computer systems (e.g., a standalone computer system, a client computer system, or a server computer system) or one or more hardware components of a computer system (e.g., a processor or a group of processors) may be configured by software (e.g., an application or application portion) as a hardware component that operates to perform some operations as described herein. A hardware component may also be implemented mechanically, electronically, or any suitable combination thereof. For example, a hardware component may include dedicated circuitry or logic that is permanently configured to perform some operations. A hardware component may be a special-purpose processor, such as a field-programmable gate array (FPGA) or an Application Specific Integrated Circuit (ASIC). A hardware component may also include programmable logic or circuitry that is temporarily configured by software to perform some operations. For example, a hardware component may include software executed by a general-purpose processor or other programmable processor. Once configured by such software, hardware components become specific machines (or specific components of a machine) tailored to perform the configured functions and are no longer general-purpose processors. It will be appreciated that the decision to implement a hardware component mechanically, in dedicated and permanently configured circuitry, or in temporarily configured circuitry (e.g., configured by software), may be driven by cost and time considerations. Accordingly, the phrase "hardware component"(or "hardware-implemented component") is to be understood to encompass a tangible entity, be that an entity that is physically constructed, permanently configured (e.g., hardwired), or temporarily configured (e.g., programmed) to operate in a particular manner or to perform some operations described herein. Considering examples in which hardware components are temporarily configured (e.g., programmed), the hardware components may not be configured or instantiated at any one instance in time. For example, where a hardware component comprises a general-purpose processor configured by software to become a special-purpose processor, the general-purpose processor may be configured as respectively different special-purpose processors (e.g., comprising different hardware components) at different times. Software accordingly configures a particular processor or processors, for example, to constitute a particular hardware component at one instance of time and to constitute a different hardware component at a different instance of time. Hardware components can provide information to, and receive information from, other hardware components. Accordingly, the described hardware components may be regarded as being communicatively coupled. Where multiple hardware components exist contemporaneously, communications may be achieved through signal transmission (e.g., over appropriate circuits and buses) between or among two or more of the hardware components. **In** examples in which multiple hardware components are configured or instantiated at different times, communications between such hardware components may be achieved, for example, through the storage and retrieval of information in memory structures to which the multiple hardware components have access. For example, one hardware component may perform an operation and store the output of that operation in a memory device to which it is communicatively coupled. A further hardware component may then, at a later time, access the memory device to retrieve and process the stored output. Hardware components may also initiate communications with input or output devices, and can operate on a resource (e.g., a collection of information). The various operations of example methods described herein may be performed by one or more processors that are temporarily configured (e.g., by software) or permanently configured to perform the relevant operations. Whether temporarily or permanently configured, such processors may constitute processor-implemented components that operate to perform one or more operations or functions described herein. As used herein, "processor-implemented component" refers to a hardware component implemented using one or more processors. Similarly, the methods described herein may be partially processor-implemented, with a particular processor or processors being an example of hardware. For example, some of the operations of a method may be performed by one or more processors or processor-implemented components. Moreover, the one or more processors may also operate to support performance of the relevant operations in a "cloud computing" environment or as a "software as a service" (SaaS). For example, at some of the operations may be performed by a group of computers (as examples of machines including processors), with these operations being accessible via a network (e.g., the Internet) and via one or more appropriate interfaces (e.g., an API). The performance of some of the operations may be distributed among the processors, residing within a single machine as well as being deployed across a number of machines. **In** some examples, the processors or processor-implemented components may be located in a single geographic location (e.g., within a home environment, an office environment, or a server farm). **In** other examples, the processors or processor-implemented components may be distributed across a number of geographic locations.

A "computer-readable medium" refers to both machine-storage media and transmission media. Thus, the terms include both storage devices/media and carrier waves/modulated data signals. The terms "machine-readable medium," "computer-readable medium" and "device-readable medium" mean the same thing and may be used interchangeably in this disclosure.

A "machine-storage medium" refers to a single or multiple storage devices and/or media (e.g., a centralized or distributed database, and/or associated caches and servers) that store executable instructions, routines and/or data. The term includes, but not be limited to, solid-state memories, and optical and magnetic media, including memory internal or external to processors. Specific examples of machine-storage media, computer-storage media and/or device-storage media include non-volatile memory, including by way of example semiconductor memory devices, e.g., erasable programmable read-only memory (EPROM), electrically erasable programmable read-only memory (EEPROM), FPGA, and flash memory devices; magnetic disks such as internal hard disks and removable disks; magneto-optical disks; and CD-ROM and DVD-ROM disks The terms "machine-storage medium," "device-storage medium," "computer-storage medium" mean the same thing and may be used interchangeably in this disclosure. The terms "machine-storage media," "computer-storage media," and "device-storage media" specifically exclude carrier waves, modulated data signals, and other such media, at some of which are covered under the term "signal medium."

A "processor" refers to any circuit or virtual circuit (a physical circuit emulated by logic executing on an actual processor) that manipulates data values according to control signals (e.g., "commands", "op codes", "machine code", and so forth) and which produces corresponding output signals that are applied to operate a machine. A processor may, for example, be a Central Processing Unit (CPU), a Reduced Instruction Set Computing (RISC) processor, a Complex Instruction Set Computing (CISC) processor, a Graphics Processing Unit (GPU), a Digital Signal Processor (DSP), an Application Specific Integrated Circuit (ASIC), a Radio-Frequency Integrated Circuit (RFIC) or any combination thereof. A processor may further be a multi-core processor having two or more independent processors (sometimes referred to as "cores") that may execute instructions contemporaneously.

A "signal medium" refers to any intangible medium that is capable of storing, encoding, or carrying the instructions for execution by a machine and includes digital or analog communications signals or other intangible media to facilitate communication of software or data. The term "signal medium" may be taken to include any form of a modulated data signal, carrier wave, and so forth. The term "modulated data signal" means a signal that has one or more of its characteristics set or changed in such a matter as to encode information in the signal. The terms "transmission medium" and "signal medium" mean the same thing and may be used interchangeably in this disclosure.

Changes and modifications may be made to the disclosed examples without departing from the scope of the present disclosure. These and other changes or modifications are intended to be included within the scope of the present disclosure, as expressed in the following claims.

## Claims

1. A computer-implemented method using a head-mounted display device (100) including a camera and one or more displays, the method comprising:
detecting a presence of an optical code (504) in a field of view of the camera of the head-mounted display device (100);
obtaining product and pricing information for an item (502) based on information in the optical code (504), the product and pricing information including an item identifier (604) and a price (606);
displaying the item identifier (604) and the price (606) in a first display area (408) of the one or more displays of the head-mounted display device; and
transferring the item identifier and the price from the first display area (408) into a shopping cart checkout list in a second display area (410) of the one or more displays of the head-mounted display device; wherein the transferring of the item identifier (604) and the price (606) into the shopping cart checkout list occurs after a delay without user input, for an item quantity greater than zero.

2. The computer-implemented method of claim 1 wherein the head-mounted display device (100) includes a touchpad (126) located on a side of the head-mounted display device (100), the method further comprising:
displaying a default item quantity for the item (502) in the first display area (408); and
receiving an input on the touchpad (126) to change the default item quantity for the item (502) to an updated item quantity.

3. The computer-implemented method of claim 2, further comprising:
based on the updated item quantity being zero, removing the item identifier (604) and the price (606) from the first display area (408) without transferring the item identifier (404) and the price (406) into the second display area (410).

4. The computer-implemented method of any preceding claim, further comprising:
comparing the product information for the item (502) with product information in a user profile;
based on the comparison, determining that the item (502) is not preferred; and
displaying a warning in the first display area (408).

5. The computer-implemented method of claim 4, further comprising:
based on determining that the item (502) is not preferred, setting a default item quantity for the item (502) to zero.

6. The computer-implemented method of any preceding claim, wherein the head-mounted display device (100) includes a touchpad (126) located on a side of the head-mounted display device (100), the method further comprising:
receiving user selection of the item identifier (604) in the shopping cart list;
displaying the item identifier (604) and the price (606) in the first display area (408); and
receiving user input on the touchpad (126) to change an item quantity for the item (502) to an updated item quantity.

7. The computer-implemented method of any preceding claim, further comprising:
determining a store identity; and
accessing product availability and pricing information based on the store identity.

8. The computer-implemented method of any preceding claim, wherein the detecting of the presence of the optical code (504) occurs in a lower-resolution computer vision mode compared to photo or video image capture functions of the head-mounted display device (100).

9. A non-transitory computer-readable storage medium, the computer-readable storage medium including instructions that when executed by a computer, cause the computer to perform operations for providing a user interface in a head-mounted display device (100) including a camera and one or more displays, the operations comprising:
detecting a presence of an optical code (504) in a field of view of the camera of the head-mounted display device (100);
obtaining product and pricing information for an item (502) based on information in the optical code (504), the product and pricing information including an item identifier (604) and a price (606);
displaying the item identifier (604) and the price (606) in a first display area (408) of the one or more displays of the head-mounted display device (100); and
transferring the item identifier (604) and the price (606) from the first display area (408) into a shopping cart checkout list in a second display area (410) of the one or more displays of the head-mounted display device (100) wherein the transferring of the item identifier (604) and the price (606) into the shopping cart checkout list occurs after a delay without user input, for an item quantity greater than zero.

10. The non-transitory computer-readable storage medium of claim 9 wherein the head-mounted display device (100) includes a touchpad (126) located on a side of the head-mounted display device (100), the operations further comprising:
displaying a default item quantity for the item (502) in the first display area (408); and
receiving an input on the touchpad (126) to change the default item quantity for the item (502) to an updated item quantity.

11. The non-transitory computer-readable storage medium of claim 9 or 10, the operations further comprising:
comparing the product information for the item (502) with product information in a user profile;
based on the comparison, determining that the item (502) is not preferred; and
displaying a warning in the first display area (408).

12. A computing apparatus comprising:
a processor; and
a memory storing instructions that, when executed by the processor, configure the apparatus to perform operations for providing a user interface in a head-mounted display device (100) including a camera and one or more displays, the operations comprising:
detecting a presence of an optical code (504) in a field of view of the camera of the head-mounted display device (100);
obtaining product and pricing information for an item (502) based on information in the optical code (504), the product and pricing information including an item identifier (604) and a price (606);
displaying the item identifier (604) and the price (606) in a first display area (408) of the one or more displays of the head-mounted display device (100); and
transferring the item identifier (604) and the price (606) from the first display area (408) into a shopping cart checkout list in a second display area (410) of the one or more displays of the head-mounted display device (100), wherein the transferring of the item identifier (604) and the price (606) into the shopping cart checkout list occurs after a delay without user input, for an item quantity greater than zero.

13. The computing apparatus of claim 12, wherein the head-mounted display device (100) includes a touchpad (126) located on a side of the head-mounted display device (100), the operations further comprising:
displaying a default item quantity for the item (502) in the first display area; and
receiving an input on the touchpad (126) to change the default item quantity for the item (502) to an updated item quantity.

14. The computing apparatus of claim 12 or 13, the operations further comprising:
comparing the product information for the item (502) with product information in a user profile;
based on the comparison, determining that the item (502) is not preferred; and
displaying a warning in the first display area.

15. The computing apparatus of claim 14, the operations further comprising:
based on determining that the item (502) is not preferred, setting a default item quantity for the item (502) to zero.

## Patentansprüche

1. Computerimplementiertes Verfahren unter Verwendung einer kopfmontierten Anzeigevorrichtung (100), die eine Kamera und eine oder mehrere Anzeigen einschließt, wobei das Verfahren Folgendes umfasst:
Erfassen eines Vorhandenseins eines optischen Codes (504) in einem Blickfeld der Kamera der kopfmontierten Anzeigevorrichtung (100);
Erhalten von Produkt- und Preisinformationen für einen Artikel (502) basierend auf Informationen in dem optischen Code (504), wobei die Produkt- und Preisinformationen eine Artikelkennung (604) und einen Preis (606) einschließen;
Anzeigen der Artikelkennung (604) und des Preises (606) in einem ersten Anzeigebereich (408) der einen oder der mehreren Anzeigen der kopfmontierten Anzeigevorrichtung; und
Transferieren der Artikelkennung und des Preises von dem ersten Anzeigebereich (408) in eine Warenkorb-Checkout-Liste in einem zweiten Anzeigebereich (410) der einen oder mehreren Anzeigen der kopfmontierten Anzeigevorrichtung; wobei das Transferieren der Artikelkennung (604) und des Preises (606) in die Warenkorb-Checkout-Liste nach einer Verzögerung ohne Benutzereingabe für eine Artikelmenge größer als null erfolgt.

2. Computerimplementiertes Verfahren nach Anspruch 1, wobei die kopfmontierte Anzeigevorrichtung (100) ein Touchpad (126) einschließt, das sich an einer Seite der kopfmontierten Anzeigevorrichtung (100) befindet, wobei das Verfahren ferner Folgendes umfasst:
Anzeigen einer Standardartikelmenge für den Artikel (502) in dem ersten Anzeigebereich (408); und
Empfangen einer Eingabe auf dem Touchpad (126), um die Standardartikelmenge für den Artikel (502) in eine aktualisierte Artikelmenge zu ändern.

3. Computerimplementiertes Verfahren nach Anspruch 2, das ferner Folgendes umfasst:
basierend darauf, dass die aktualisierte Artikelmenge null lautet, Entfernen der Artikelkennung (604) und des Preises (606) aus dem ersten Anzeigebereich (408) ohne Transferieren der Artikelkennung (404) und des Preises (406) in den zweiten Anzeigebereich (410).

4. Computerimplementiertes Verfahren nach einem vorstehenden Anspruch, das ferner Folgendes umfasst:
Vergleichen der Produktinformationen für den Artikel (502) mit Produktinformationen in einem Benutzerprofil;
basierend auf dem Vergleich, Bestimmen, dass der Artikel (502) nicht bevorzugt ist; und
Anzeigen einer Warnung in dem ersten Anzeigebereich (408).

5. Computerimplementiertes Verfahren nach Anspruch 4, das ferner Folgendes umfasst:
basierend auf dem Bestimmen, dass der Artikel (502) nicht bevorzugt ist, Einstellen einer Standardartikelmenge für den Artikel (502) auf null.

6. Computerimplementiertes Verfahren nach einem vorstehenden Anspruch, wobei die kopfmontierte Anzeigevorrichtung (100) ein Touchpad (126) einschließt, das sich an einer Seite der kopfmontierten Anzeigevorrichtung (100) befindet, wobei das Verfahren ferner Folgendes umfasst:
Empfangen einer Benutzerauswahl der Artikelkennung (604) in der Warenkorbliste;
Anzeigen der Artikelkennung (604) und des Preises (606) in dem ersten Anzeigebereich (408); und
Empfangen einer Benutzereingabe auf dem Touchpad (126), um die Artikelmenge für den Artikel (502) in eine aktualisierte Artikelmenge zu ändern.

7. Computerimplementiertes Verfahren nach einem vorstehenden Anspruch, das ferner Folgendes umfasst:
Bestimmen einer Identität des Geschäfts; und
Zugreifen auf Produktverfügbarkeit und Preisinformationen basierend auf der Identität des Geschäfts.

8. Computerimplementiertes Verfahren nach einem vorstehenden Anspruch, wobei das Erfassen des Vorhandenseins des optischen Codes (504) in einem Computer-Vision-Modus mit niedriger Auflösung im Vergleich zu Foto- oder Videobildaufnahmefunktionen der kopfmontierten Anzeigevorrichtung (100) erfolgt.

9. Nichtflüchtiges computerlesbares Speichermedium, wobei das computerlesbare Speichermedium Anweisungen einschließt, die, wenn sie von einem Computer ausgeführt werden, den Computer zum Durchführen von Operationen zum Bereitstellen einer Benutzeroberfläche in einer kopfmontierten Anzeigevorrichtung (100), die eine Kamera und eine oder mehrere Anzeigen einschließt, veranlassen, wobei die Operationen Folgendes umfassen:
Erfassen eines Vorhandenseins eines optischen Codes (504) in einem Blickfeld der Kamera der kopfmontierten Anzeigevorrichtung (100);
Erhalten von Produkt- und Preisinformationen für einen Artikel (502) basierend auf Informationen in dem optischen Code (504), wobei die Produkt- und Preisinformationen eine Artikelkennung (604) und einen Preis (606) einschließen;
Anzeigen der Artikelkennung (604) und des Preises (606) in einem ersten Anzeigebereich (408) der einen oder der mehreren Anzeigen der kopfmontierten Anzeigevorrichtung (100); und
Transferieren der Artikelkennung (604) und des Preises (606) von dem ersten Anzeigebereich (408) in eine Warenkorb-Checkout-Liste in einem zweiten Anzeigebereich (410) der einen oder mehreren Anzeigen der kopfmontierten Anzeigevorrichtung (100), wobei das Transferieren der Artikelkennung (604) und des Preises (606) in die Warenkorb-Checkout-Liste nach einer Verzögerung ohne Benutzereingabe für eine Artikelmenge größer als null erfolgt.

10. Nichtflüchtiges computerlesbares Speichermedium nach Anspruch 9, wobei die kopfmontierte Anzeigevorrichtung (100) ein Touchpad (126) einschließt, das sich an einer Seite der kopfmontierten Anzeigevorrichtung (100) befindet, wobei die Operationen ferner Folgendes umfassen:
Anzeigen einer Standardartikelmenge für den Artikel (502) in dem ersten Anzeigebereich (408); und
Empfangen einer Eingabe auf dem Touchpad (126), um die Standardartikelmenge für den Artikel (502) in eine aktualisierte Artikelmenge zu ändern.

11. Nichtflüchtiges computerlesbares Speichermedium nach Anspruch 9 oder 10, wobei die Operationen ferner Folgendes umfassen:
Vergleichen der Produktinformationen für den Artikel (502) mit Produktinformationen in einem Benutzerprofil;
basierend auf dem Vergleich, Bestimmen, dass der Artikel (502) nicht bevorzugt ist; und
Anzeigen einer Warnung in dem ersten Anzeigebereich (408).

12. Recheneinrichtung, die Folgendes umfasst:
einen Prozessor; und
einen Speicher, der Anweisungen speichert, die, wenn sie von dem Prozessor ausgeführt werden, die Einrichtung dazu konfigurieren, Operationen zum Bereitstellen einer Benutzeroberfläche in einer kopfmontierten Anzeigevorrichtung (100), die eine Kamera und eine oder mehrere Anzeigen einschließt, bereitzustellen, wobei die Operationen Folgendes umfassen:
Erfassen eines Vorhandenseins eines optischen Codes (504) in einem Blickfeld der Kamera der kopfmontierten Anzeigevorrichtung (100);
Erhalten von Produkt- und Preisinformationen für einen Artikel (502) basierend auf Informationen in dem optischen Code (504), wobei die Produkt- und Preisinformationen eine Artikelkennung (604) und einen Preis (606) einschließen;
Anzeigen der Artikelkennung (604) und des Preises (606) in einem ersten Anzeigebereich (408) der einen oder der mehreren Anzeigen der kopfmontierten Anzeigevorrichtung (100); und
Transferieren der Artikelkennung (604) und des Preises (606) von dem ersten Anzeigebereich (408) in eine Warenkorb-Checkout-Liste in einem zweiten Anzeigebereich (410) der einen oder mehreren Anzeigen der kopfmontierten Anzeigevorrichtung (100), wobei das Transferieren der Artikelkennung (604) und des Preises (606) in die Warenkorb-Checkout-Liste nach einer Verzögerung ohne Benutzereingabe für eine Artikelmenge größer als null erfolgt.

13. Recheneinrichtung nach Anspruch 12, wobei die kopfmontierte Anzeigevorrichtung (100) ein Touchpad (126) einschließt, das sich an einer Seite der kopfmontierten Anzeigevorrichtung (100) befindet, wobei die Operationen ferner Folgendes umfassen:
Anzeigen einer Standardartikelmenge für den Artikel (502) in dem ersten Anzeigebereich; und
Empfangen einer Eingabe auf dem Touchpad (126), um die Standardartikelmenge für den Artikel (502) in eine aktualisierte Artikelmenge zu ändern.

14. Recheneinrichtung nach Anspruch 12 oder 13, wobei die Operationen ferner Folgendes umfassen:
Vergleichen der Produktinformationen für den Artikel (502) mit Produktinformationen in einem Benutzerprofil;
basierend auf dem Vergleich, Bestimmen, dass der Artikel (502) nicht bevorzugt ist; und
Anzeigen einer Warnung in dem ersten Anzeigebereich.

15. Recheneinrichtung nach Anspruch 14, wobei die Operationen ferner Folgendes umfassen:
basierend auf dem Bestimmen, dass der Artikel (502) nicht bevorzugt ist, Einstellen einer Standardartikelmenge für den Artikel (502) auf null.

## Revendications

1. Procédé mis en œuvre par ordinateur utilisant un dispositif d'affichage monté sur la tête (100) incluant une caméra et un ou plusieurs affichages, le procédé comprenant :
la détection d'une présence d'un code optique (504) dans un champ de vision de la caméra du dispositif d'affichage monté sur la tête (100) ;
l'obtention d'informations de produit et de tarification pour un article (502) sur la base d'informations dans le code optique (504), les informations de produit et de tarification incluant un identificateur d'article (604) et un prix (606) ;
l'affichage de l'identificateur d'article (604) et du prix (606) dans une première zone d'affichage (408) des un ou plusieurs affichages du dispositif d'affichage monté sur la tête ; et
le transfert de l'identificateur d'article et du prix de la première zone d'affichage (408) jusque dans une liste de passage en caisse de panier d'achat dans une deuxième zone d'affichage (410) des un ou plusieurs affichages du dispositif d'affichage monté sur la tête ; dans lequel le transfert de l'identificateur d'article (604) et du prix (606) jusque dans la liste de passage en caisse de panier d'achat a lieu après un délai sans entrée d'utilisateur, pour une quantité d'articles supérieure à zéro.

2. Procédé mis en œuvre par ordinateur selon la revendication 1, dans lequel le dispositif d'affichage monté sur la tête (100) inclut un pavé tactile (126) situé sur un côté du dispositif d'affichage monté sur la tête (100), le procédé comprenant en outre :
l'affichage d'une quantité d'articles par défaut pour l'article (502) dans la première zone d'affichage (408) ; et
la réception d'une entrée sur le pavé tactile (126) pour changer la quantité d'articles par défaut pour l'article (502) en une quantité d'articles mise à jour.

3. Procédé mis en œuvre par ordinateur selon la revendication 2, comprenant en outre :
sur la base de la quantité d'articles mise à jour égale à zéro, le retrait de l'identificateur d'article (604) et du prix (606) de la première zone d'affichage (408) sans transférer l'identificateur d'article (404) et le prix (406) jusque dans la deuxième zone d'affichage (410).

4. Procédé mis en œuvre par ordinateur selon l'une quelconque des revendications précédentes, comprenant en outre :
la comparaison des informations de produit pour l'article (502) avec des informations de produit dans un profil d'utilisateur ;
sur la base de la comparaison, la détermination que l'article (502) n'est pas préféré ; et
l'affichage d'un avertissement dans la première zone d'affichage (408).

5. Procédé mis en œuvre par ordinateur selon la revendication 4, comprenant en outre :
sur la base de la détermination que l'article (502) n'est pas préféré, le réglage d'une quantité d'articles par défaut pour l'article (502) à zéro.

6. Procédé mis en œuvre par ordinateur selon l'une quelconque des revendications précédentes, dans lequel le dispositif d'affichage monté sur la tête (100) inclut un pavé tactile (126) situé sur un côté du dispositif d'affichage monté sur la tête (100), le procédé comprenant en outre :
la réception d'une sélection d'utilisateur de l'identificateur d'article (604) dans la liste de panier d'achat ;
l'affichage de l'identificateur d'article (604) et du prix (606) dans la première zone d'affichage (408) ; et
la réception d'une entrée d'utilisateur sur le pavé tactile (126) pour changer une quantité d'articles pour l'article (502) en une quantité d'articles mise à jour.

7. Procédé mis en œuvre par ordinateur selon l'une quelconque des revendications précédentes, comprenant en outre :
la détermination d'une identité de magasin ; et
l'accès à des informations de disponibilité et de tarification de produit en fonction de l'identité du magasin.

8. Procédé mis en œuvre par ordinateur selon l'une quelconque des revendications précédentes, dans lequel la détection de la présence du code optique (504) a lieu dans un mode de vision par ordinateur à une résolution inférieure par rapport à des fonctions de capture d'image photo ou vidéo du dispositif d'affichage monté sur la tête (100).

9. Support de stockage non transitoire lisible par ordinateur, le support de stockage lisible par ordinateur incluant des instructions qui, lorsqu'elles sont exécutées par un ordinateur, amènent l'ordinateur à effectuer des opérations destinées à fournir une interface utilisateur dans un dispositif d'affichage monté sur la tête (100) incluant une caméra et un ou plusieurs affichages, les opérations comprenant :
la détection d'une présence d'un code optique (504) dans un champ de vision de la caméra du dispositif d'affichage monté sur la tête (100) ;
l'obtention d'informations de produit et de tarification pour un article (502) sur la base d'informations dans le code optique (504), les informations de produit et de tarification incluant un identificateur d'article (604) et un prix (606) ;
l'affichage de l'identificateur d'article (604) et du prix (606) dans une première zone d'affichage (408) des un ou plusieurs affichages du dispositif d'affichage monté sur la tête (100) ; et
le transfert de l'identificateur d'article (604) et du prix (606) de la première zone d'affichage (408) jusque dans une liste de passage en caisse de panier d'achat dans une deuxième zone d'affichage (410) des un ou plusieurs affichages du dispositif d'affichage monté sur la tête (100) dans lequel le transfert de l'identificateur d'article (604) et du prix (606) jusque dans la liste de passage en caisse de panier d'achat a lieu après un délai sans entrée d'utilisateur, pour une quantité d'articles supérieure à zéro.

10. Support de stockage non transitoire lisible par ordinateur selon la revendication 9 dans lequel le dispositif d'affichage monté sur la tête (100) inclut un pavé tactile (126) situé sur un côté du dispositif d'affichage monté sur la tête (100), les opérations comprenant en outre :
l'affichage d'une quantité d'articles par défaut pour l'article (502) dans la première zone d'affichage (408) ; et
la réception d'une entrée sur le pavé tactile (126) pour changer la quantité d'articles par défaut pour l'article (502) en une quantité d'articles mise à jour.

11. Support de stockage non transitoire lisible par ordinateur selon la revendication 9 ou 10, les opérations comprenant en outre :
la comparaison des informations de produit pour l'article (502) avec des informations de produit dans un profil d'utilisateur ;
sur la base de la comparaison, la détermination que l'article (502) n'est pas préféré ; et
l'affichage d'un avertissement dans la première zone d'affichage (408).

12. Appareil informatique comprenant :
un processeur ; et
une mémoire stockant des instructions qui, lorsqu'elles sont exécutées par le processeur, configurent l'appareil pour effectuer des opérations destinées à fournir une interface utilisateur dans un dispositif d'affichage monté sur la tête (100) incluant une caméra et un ou plusieurs affichages, les opérations comprenant :
la détection d'une présence d'un code optique (504) dans un champ de vision de la caméra du dispositif d'affichage monté sur la tête (100) ;
l'obtention d'informations de produit et de tarification pour un article (502) sur la base d'informations dans le code optique (504), les informations de produit et de tarification incluant un identificateur d'article (604) et un prix (606) ;
l'affichage de l'identificateur d'article (604) et du prix (606) dans une première zone d'affichage (408) des un ou plusieurs affichages du dispositif d'affichage monté sur la tête (100) ; et
le transfert de l'identificateur d'article (604) et du prix (606) de la première zone d'affichage (408) jusque dans une liste de passage en caisse de panier d'achat dans une deuxième zone d'affichage (410) des un ou plusieurs affichages du dispositif d'affichage monté sur la tête (100), dans lequel le transfert de l'identificateur d'article (604) et du prix (606) jusque dans la liste de passage en caisse de panier d'achat a lieu après un délai sans entrée d'utilisateur, pour une quantité d'articles supérieure à zéro.

13. Appareil informatique selon la revendication 12, dans lequel le dispositif d'affichage monté sur la tête (100) inclut un pavé tactile (126) situé sur un côté du dispositif d'affichage monté sur la tête (100), les opérations comprenant en outre :
l'affichage d'une quantité d'articles par défaut pour l'article (502) dans la première zone d'affichage ; et
la réception d'une entrée sur le pavé tactile (126) pour changer la quantité d'articles par défaut pour l'article (502) en une quantité d'articles mise à jour.

14. Appareil informatique selon la revendication 12 ou 13, les opérations comprenant en outre :
la comparaison des informations de produit pour l'article (502) avec des informations de produit dans un profil d'utilisateur ;
sur la base de la comparaison, la détermination que l'article (502) n'est pas préféré ; et
l'affichage d'un avertissement dans la première zone d'affichage.

15. Appareil informatique selon la revendication 14, les opérations comprenant en outre :
sur la base de la détermination que l'article (502) n'est pas préféré, le réglage d'une quantité d'articles par défaut pour l'article (502) à zéro.
